(19) Europäisches Patentamt

European Patent Office

Office européen des brevets

(11) EP 0 569 982 B1

## (12) EUROPEAN PATENT SPECIFICATION

(45) Date of publication and mention
of the grant of the patent:
**10.03.1999 Bulletin 1999/10**

(51) Int Cl.⁶: **G06K 9/48**

(21) Application number: **93107804.2**

(22) Date of filing: **13.05.1993**

(54) **Method and apparatus for processing images with symbols with dense edges**

Verfahren und Gerät zur Verarbeitung von Bildern mit Symbolen mit dichten Kanten

Méthode et appareil pour le traitement d'images avec des symboles aux bords denses

(84) Designated Contracting States:
**AT BE CH DE DK ES FR GB GR IE IT LI LU MC NL PT SE**

(30) Priority: **14.05.1992 US 883853**

(43) Date of publication of application:
**18.11.1993 Bulletin 1993/46**

(73) Proprietor: **UNITED PARCEL SERVICE OF AMERICA, INC.**
**Atlanta, GA 30346 (US)**

(72) Inventor: **Surka, Stefan**
**Sandy Hook Connecticut 06482 (US)**

(74) Representative: **Beetz & Partner Patentanwälte**
**Steinsdorfstrasse 10**
**80538 München (DE)**

(56) References cited:
**EP-A- 0 331 049**

- **SYSTEMS & COMPUTERS IN JAPAN., vol.18, no.4, April 1987, NEW YORK, NY pages 24 - 32 H TAKEDA ET AL 'Matching of distorted central symmetry image - an application to seal impression collation'**
- **PATENT ABSTRACTS OF JAPAN vol. 17, no. 471 (P-1601) 26 August 1993 & JP-A-05 108 860 (OMRON) 30 April 1993**
- **INT. JOINT CONF. ON NEURAL NETWORKS, 17 June 1990, SAN DIEGO, CA pages 949 - 54 A RAO ET L A AKERS 'A retinomorphic VLSI smart sensor for invariant geometric object recognition'**

## Description

<u>Field Of The Invention</u>

The invention relates to a method and an apparatus for locating at least one object within an intensity image. In particular, it relates to reading and processing of package labels and to systems for locating and extracting bar codes and other symbols from low resolution, noisy or cluttered images.

<u>Background Of The Invention</u>

Package handling and sorting operations often require recognition systems for reading bar codes and other symbols which have been affixed to packages. Some types of sorting equipment, for example, use bar code recognition systems to sort packages in accordance with information which has been included in the bar code symbol.

Overhead CCD scanner systems have employed stationary reading devices to scan labels affixed to moving packages. Such devices typically include a linear array of photosensitive cells aligned orthogonally to the motion of the package and a lens system for projecting the image at a scanning window onto the linear array. The cells of the array are scanned at a rate which is relatively high compared to the motion of the package through the read station. The images produced by such scanning equipment are often noisy and of low resolution.

Overhead CCD scanning systems which employ linear arrays and bar code laser scanners typically do not accurately determine the location and/or orientation of a bar code symbol affixed to a moving package. In high speed package sorting operations, this problem is exacerbated by the fact that individual bar code symbols, which are affixed to packages on a moving belt, will typically not have a common alignment or orientation.

A further complication to reading a bar code symbol is introduced when the symbol is embedded against a cluttered background on the moving package. The cluttered background can result from other information, besides the bar code symbol being scanned, which has been placed on the package in close proximity to the bar code symbol. A cluttered or noisy image can also result from stray marks on the package near the bar code symbol, or from a torn, smudged, or mutilated bar code symbol.

It is an object of the present invention to provide a method and an apparatus for locating within an intensity image varying types of objects or symbols including bar codes, stacked bar codes, square arrays and hexagonal arrays.

This object is accomplished in accordance with the features of the independent claims. Dependent claims are directed to preferred embodiments of the invention.

Figures 1-9 show embodiments of the invention.

Figures 10-12E are not embodiments of the invention.

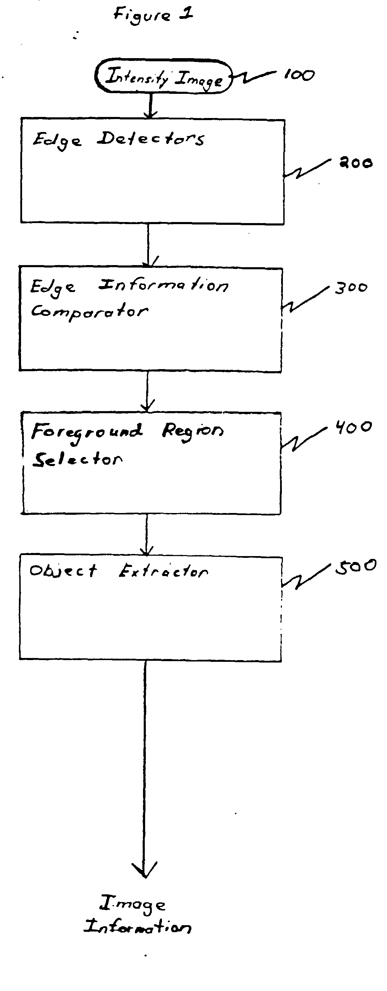

Figure 1 is a flow diagram illustrating the operation of an embodiment of a system for locating an object in an intensity image.

Figure 2A shows two edge detectors used in connection with a described embodiment.

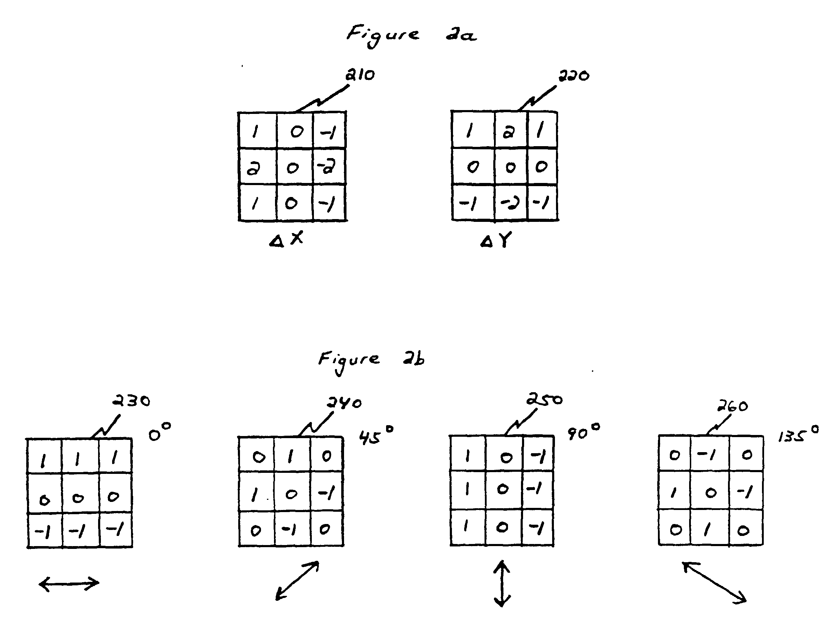

Figure 2B shows four edge detectors used in connection with a further described embodiment.

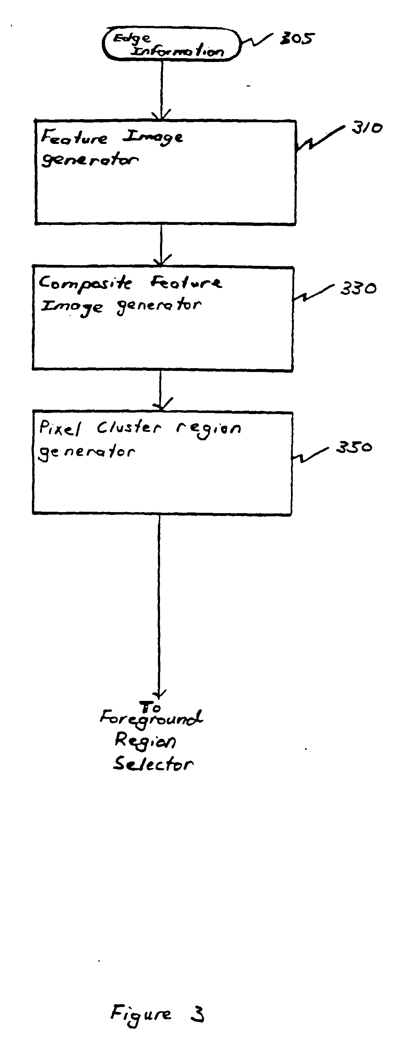

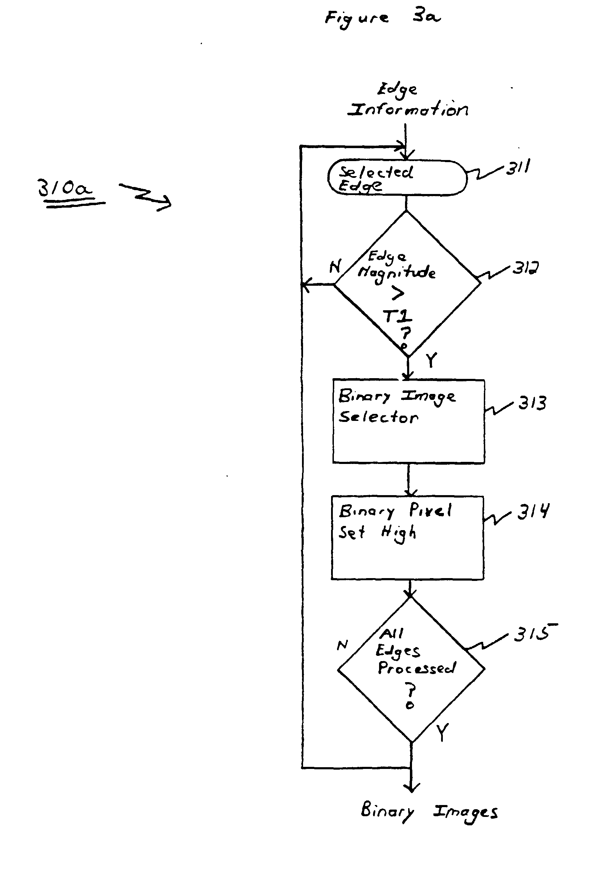

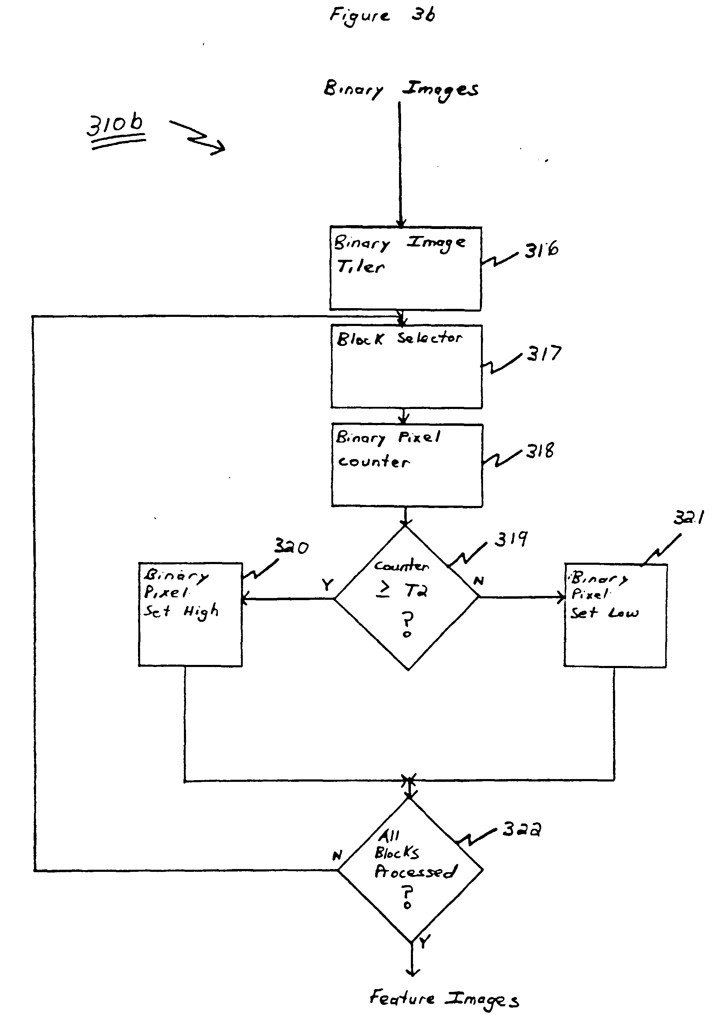

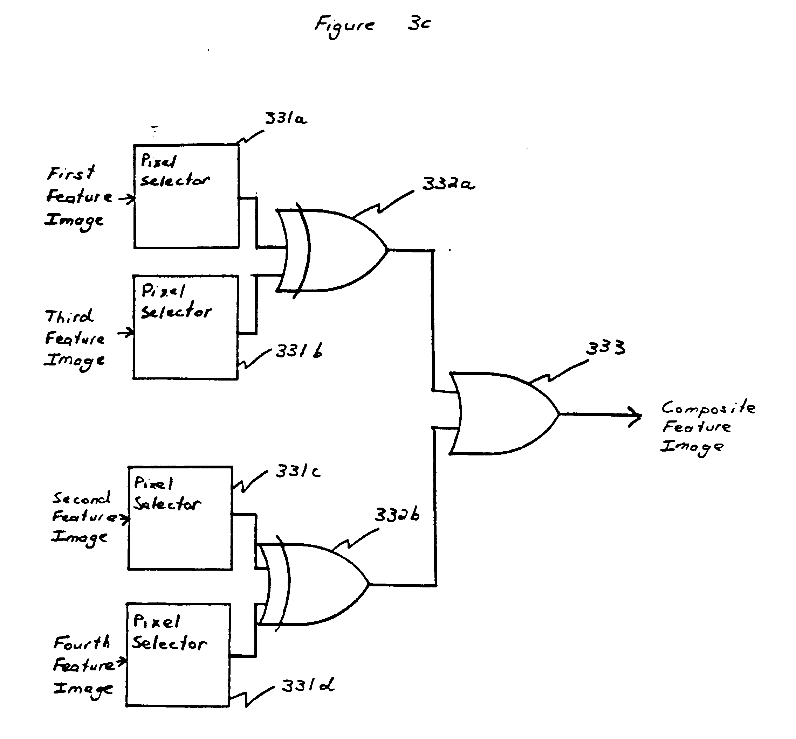

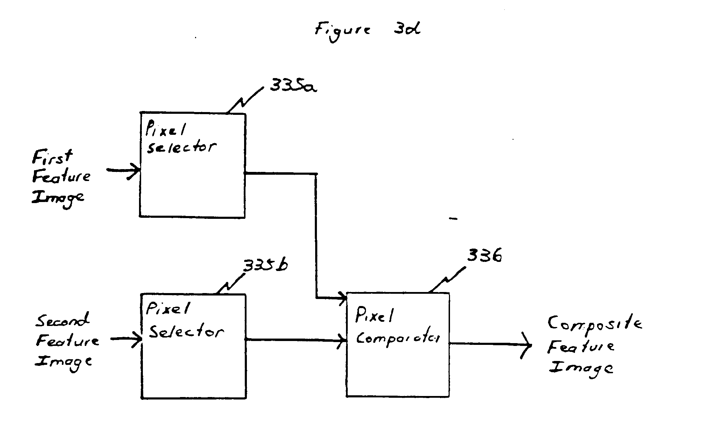

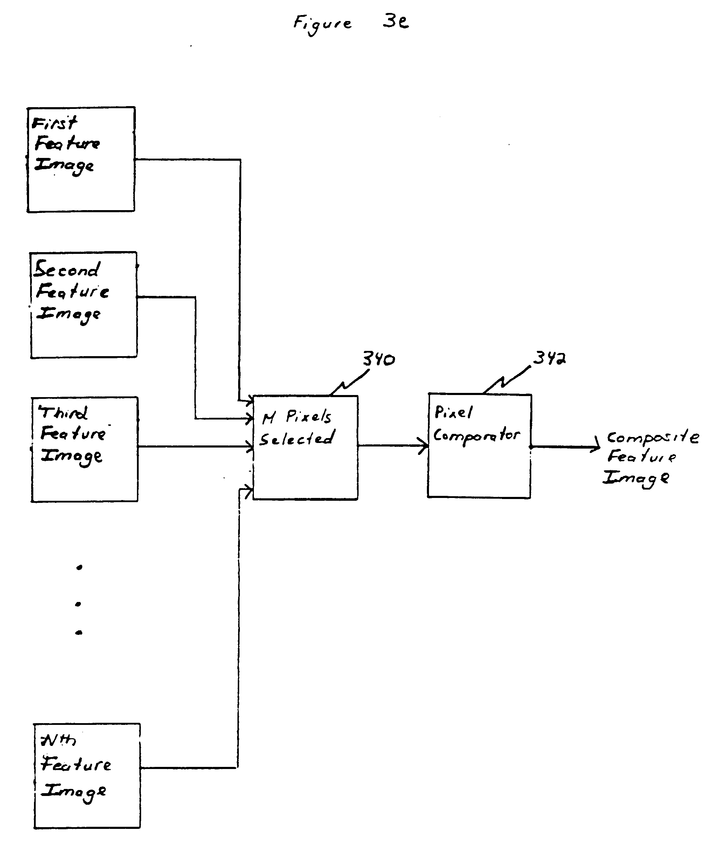

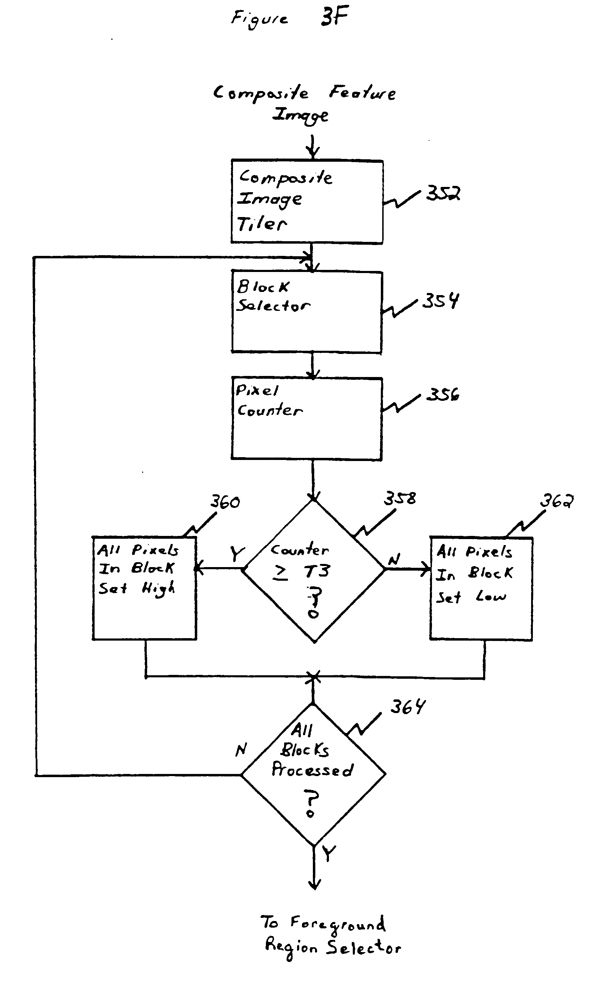

Figure 3 is a flow diagram illustrating the operation of an edge information comparator.

Figure 3A is a flow diagram illustrating a process for forming binary images according to a further embodiment.

Figure 3B is a flow diagram illustrating a process for generating feature images from binary images according to a further embodiment.

Figure 3C is a flow diagram illustrating the operation of a composite feature image generator according to a further embodiment.

Figure 3D is a flow diagram illustrating the operation of an alternative composite feature image generator according to a further embodiment.

Figure 3E is a flow diagram illustrating the operation of a still further alternative composite feature image generator according to another embodiment.

Figure 3F is a flow diagram illustrating the operation of a pixel cluster region generator for processing a composite feature image according to a further embodiment.

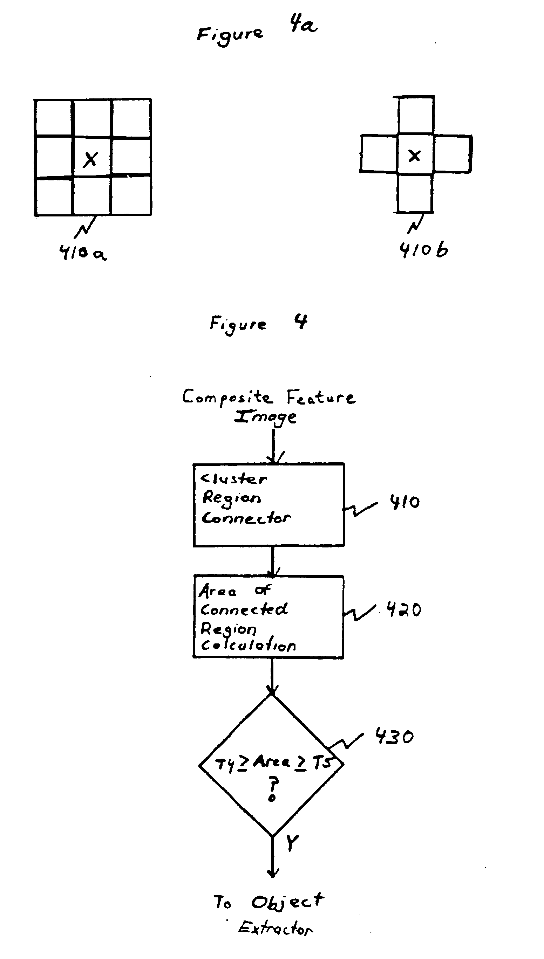

Figure 4 is a flow diagram illustrating the operation of a foreground region selector according to a further embodiment.

Figure 4A shows two connectivity operators employed in connection with alternative embodiments.

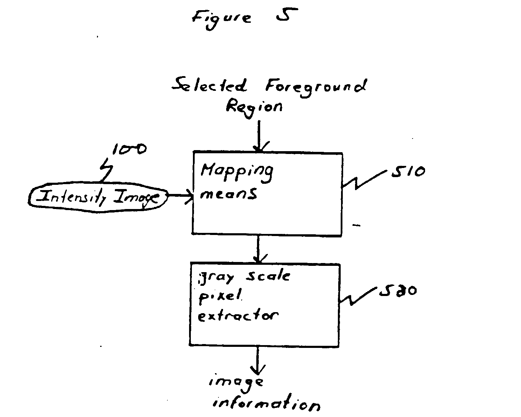

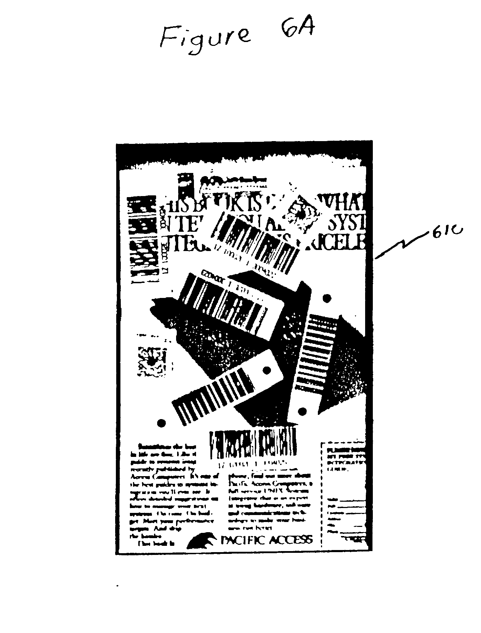

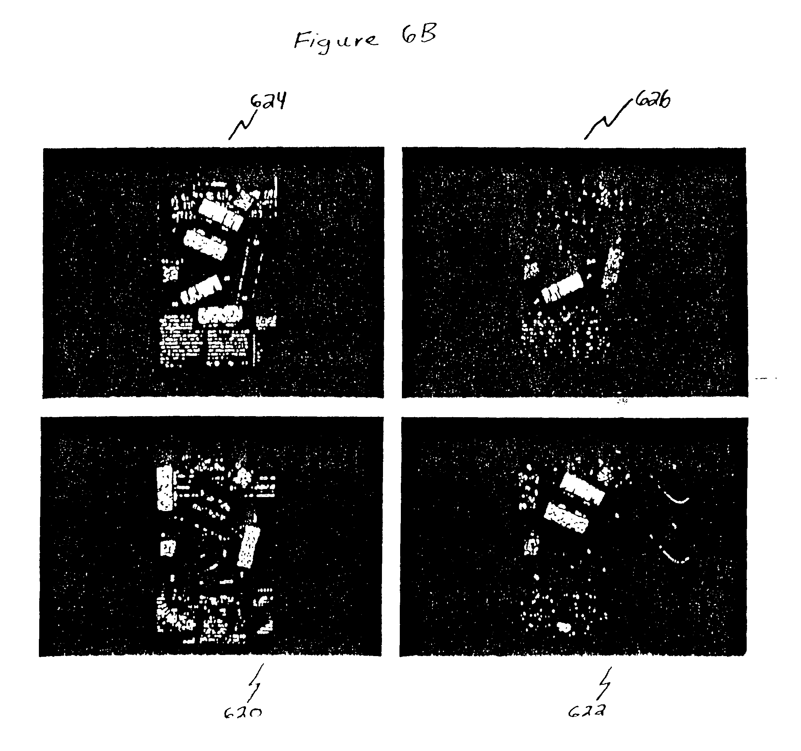

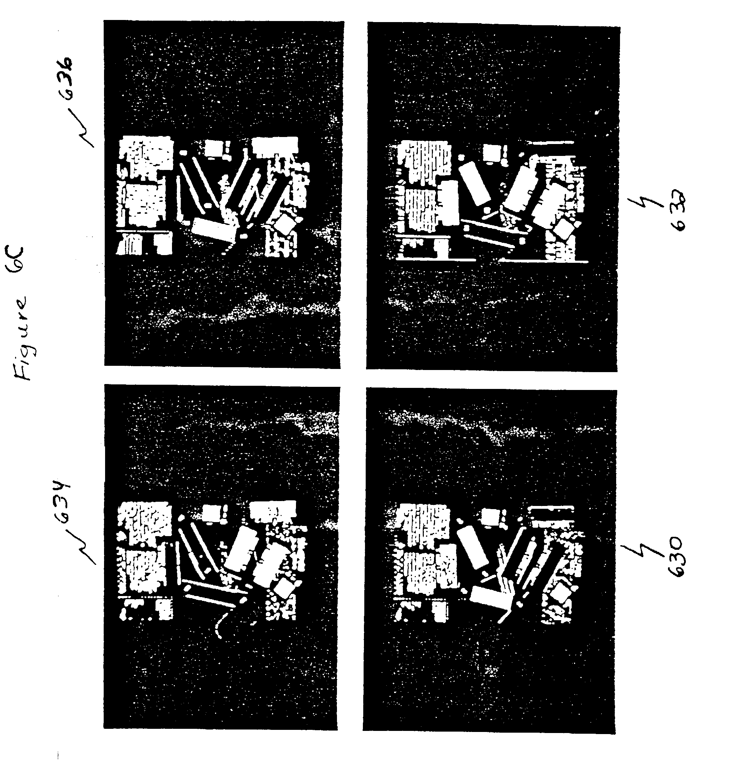

Figure 5 is a flow diagram illustrating the operation of an object extracting process according to a further embodiment.

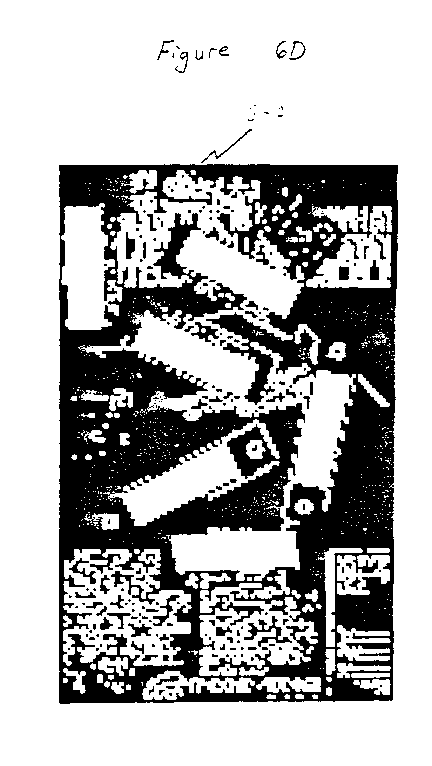

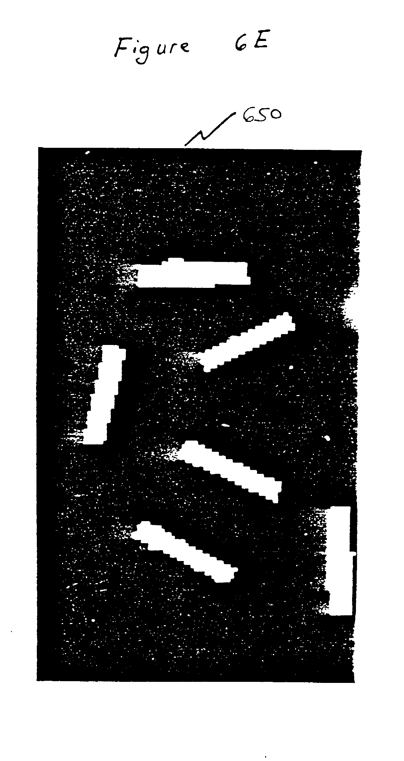

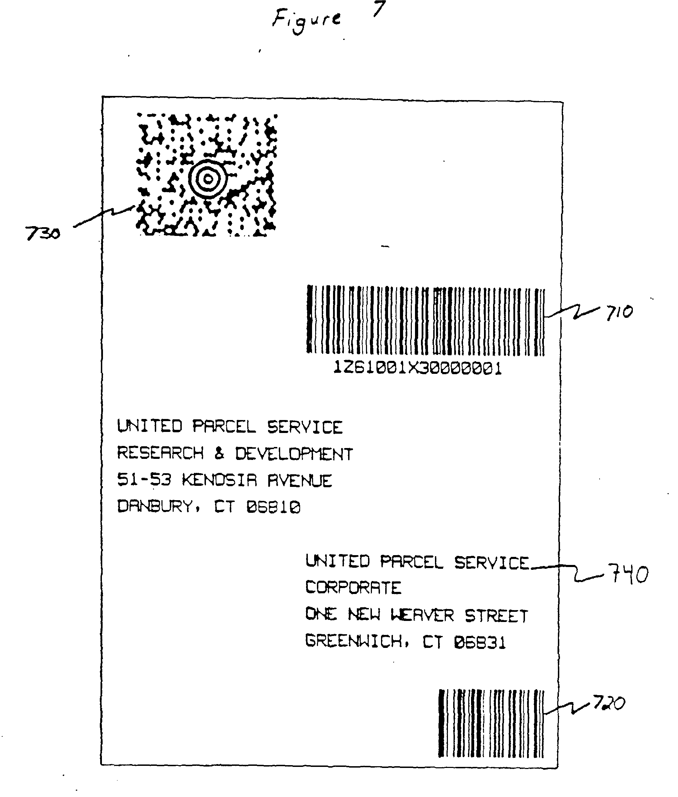

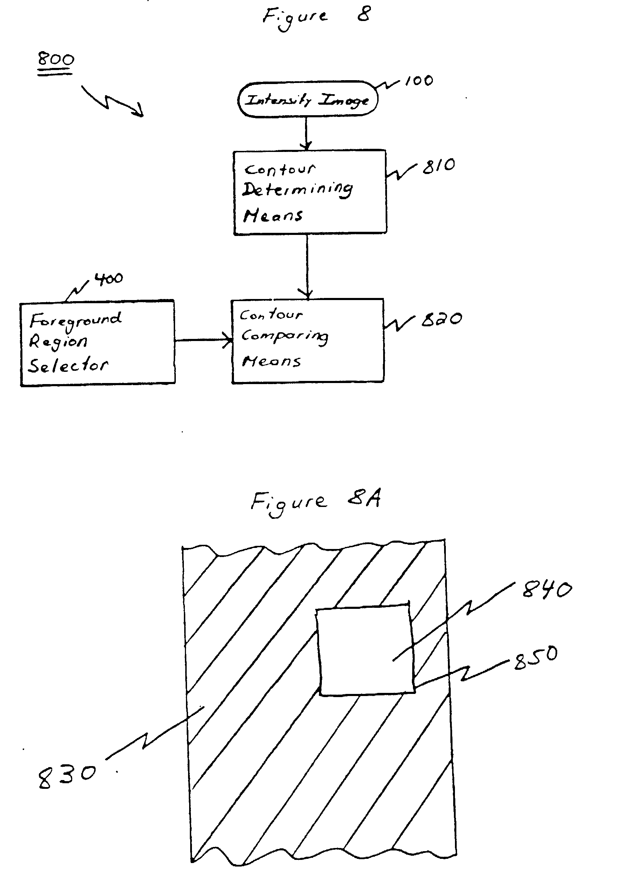

Figure 6A shows a exemplary low resolution intensity image representative of an imaged region being scanned.

Figure 6B shows four exemplary binary images which resulted from the application of the edge detectors of Figure 2B to the intensity image of Figure 6A.

Figure 6C shows four exemplary feature images which resulted from the application of the majority dilation and minority erosion process of Figure 3B to the binary images of Figure 6B.

Figure 6D shows an exemplary composite feature image which resulted from the application of the process of Figure 3C to the feature images of Figure 6C.

Figure 6E shows an exemplary composite feature image which resulted from the application of the majority dilation and minority erosion process of Figure 3E to the composite feature image of Figure 6D.

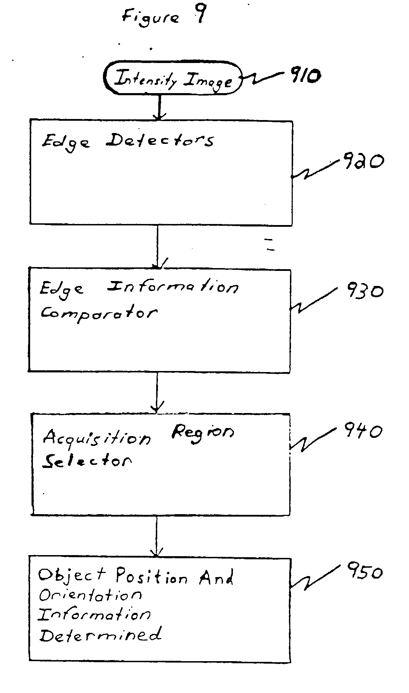

Figure 7 shows an exemplary packaging label having a plurality of symbols with edges oriented in accordance with different target orientations.

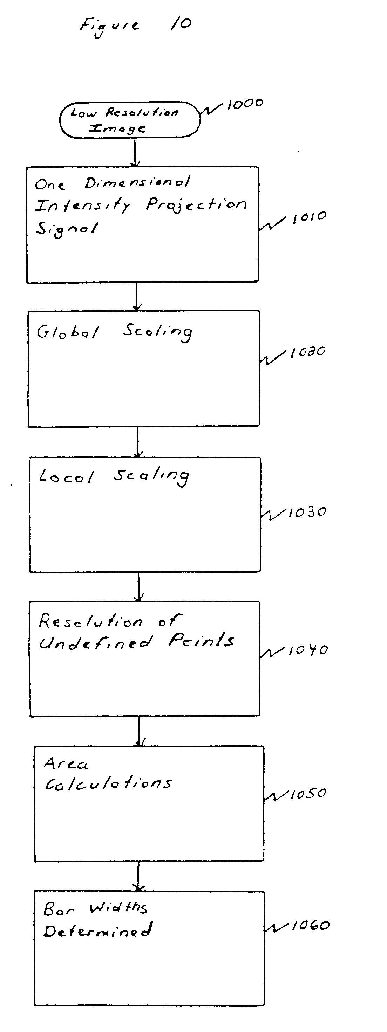

Figure 8 is a flow diagram illustrating the operation of a pre-processing step employed in connection with a preferred embodiment of the present invention.

Figure 8A shows the contour of an exemplary package positioned on a black belt.

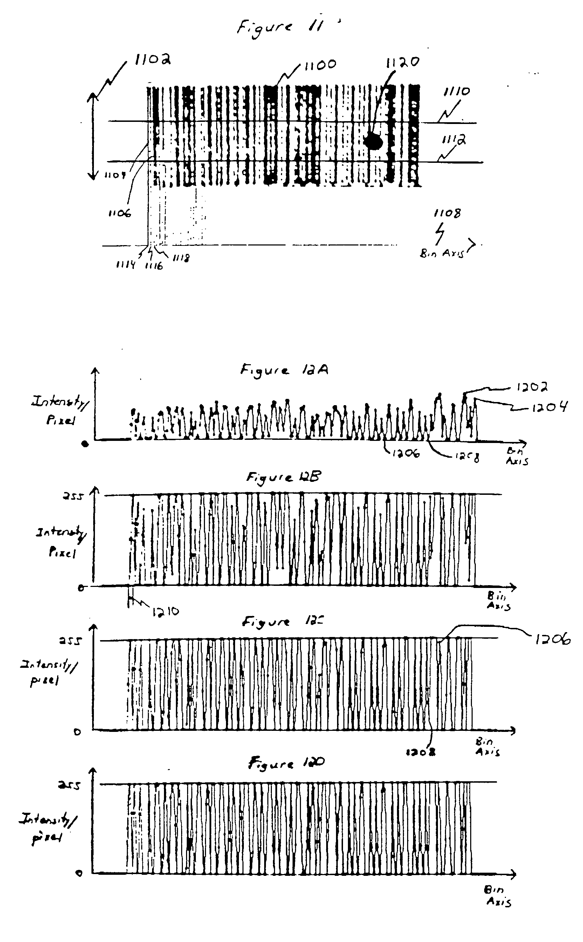

Figure 9 is a flow diagram illustrating the operation of an embodiment of determining the orientation of an object in an intensity image.

Figure 10 is a flow diagram illustrating the operation of a system for determining bar widths from a two-dimensional image representative of a bar code symbol.

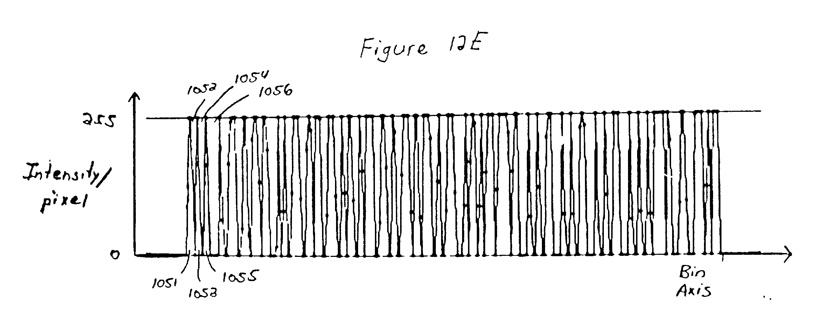

Figure 11 shows an exemplary low resolution image for processing by the above image processing system.

Figure 12A shows a one-dimensional intensity projection image derived from a low resolution image representative of a bar code symbol.

Figure 12B shows an exemplary projection signal derived from the application of the first global scaling method to the projection signal of Figure 12A.

Figure 12C shows an exemplary projection signal derived from the application of the local scaling and interpolation methods to the projection signal of Figure 12B.

Figure 12D shows an exemplary projection signal derived from the application of the second global scaling method to the projection signal of Figure 12C.

Figure 12E is an expanded representation of the projection signal of Figure 12D.

Described is a system for locating an object within an intensity image, a system for determining the orientation and position of an object within an intensity image and a system for image processing. The object locating system is discussed in connection with Figures 1-8; the object orientation system is discussed in connection with Figure 9; and the image processing system is disccused in connection with Figures 10-12E. As used herein, the term "object" refers to symbols, figures, patterns, shapes or areas having dense edges. Without limitation, the term "object" includes bar code symbols, stacked bar code symbols, and arrays of squares, hexagons and other polygons.

Object Locating System

Referring now to Figure 1, there is shown a flow diagram illustrating the operation of an embodiment of a system for locating an object in an intensity image. The system accepts as its input intensity image 100 which is preferably a digitized gray scale representation of an imaged region being scanned. In the preferred embodiment, intensity image 100 is a low resolution image derived from a linear array of CCDs. The system shown includes means 200 for analyzing an intensity image with at least two different edge detectors to detect a multiplicity of edges oriented in at least two directional ranges. Means 300 is provided for comparing information representative of detected edges angularly oriented in a first of said at least two directional ranges and information representative of detected edges angularly oriented in a second of said at least two directional ranges. Based on the results of comparisons made by means 300, means 400 selects at least one foreground region from intensity image 100 wherein detected edges are angularly oriented substantially in accordance with a target orientation. In the preferred embodiment, means 500 is provided for extracting image information representative of a located object from intensity image 100.

Referring now to Figure 2A, there are shown two edge detectors 210, 220 which are employed by means 200 in connection with a described embodiment. In such an embodiment, means 200 applies edge detector 210 to intensity image 100 on a pixel by pixel basis to determine the X component ($\Delta$X) of each edge gradient. Similarly, edge detector 220 is applied to intensity image 100 on a pixel by pixel basis to determine the Y component ($\Delta$Y) of each edge gradient. Based on this X and Y component information, means 200 determines edge magnitude information ($M_n$) and direction information ($D_n$) at each pixel in intensity image 100 according to equations (1) and (2) below:

$$M_n = (\Delta X_n^2 + \Delta Y_n^2)^{1/2} \qquad (1)$$

$$D_n = \arctan (\Delta Y_n / \Delta X_n) \qquad (2)$$

In a preferred embodiment, intensity image 100 is formed of 782 x 1288 8-bit pixels and $M_n$ is normalized to range from 0-127. This normalization is achieved by dividing the result of equation (1) by 8.

In an alternative embodiment, edge detectors 230, 240, 250, 260 of Figure 2B are applied by means 200 to determine edge magnitude information and direction information at each pixel in intensity image 100. More particularly, edge detector 230 is applied to intensity image 100 on a pixel by pixel basis to determine magnitude information corresponding to edges angularly oriented in a directional range within 22.5 degrees on either side of the 0 degree axis; edge detector 240 is applied to intensity image 100 on a pixel by pixel basis to determine magnitude information corresponding to edges angularly oriented in a directional range within 22.5 degrees on either side of the 45 degree axis; edge detector 250 is applied to intensity image 100 on a pixel by pixel basis to determine magnitude information corresponding to edges angularly oriented in a directional range within 22.5 degrees on either side of the 90 degree axis; and edge detector 260 is applied to intensity image 100 on a pixel by pixel basis to determine magnitude information corresponding to edges angularly oriented in a directional range within 22.5 degrees on either side of the 135 degree axis.

Edge information from means 200 is next applied to edge information comparator 300. In a preferred embodiment, edge information comparator 300 is comprised of means 310 for generating at least two feature images, means 330 for forming a composite feature image, means 350 for forming a pixel cluster region in a composite feature image.

In a further embodiment, means 310 generates at least two feature images by associating the edge magnitude information determined for each pixel in intensity image 100 with one of at least two corresponding directional ranges. In a first preferred embodiment, edge detectors 210, 220 are used to determine the angular orientation of each edge detected from intensity image 100, and each detected edge is then classified as being angularly oriented in one of at least three directional ranges. For example, each detected edge may be classified as being oriented in either (i) a first directional range within 30 degrees on either side of the 0 degree axis, (ii) a second directional within 30 degrees on either side of the 60 degree axis or (iii) a third directional within 30 degrees on either side of the 120 degree axis. For each directional range, means 310 associates the detected edges angularly oriented in that directional range with a corresponding feature image. In a preferred embodiment, each feature image is formed of binary pixels which are used to represent the detected edges which have been associated with that respective feature image. The position of each binary pixel set high (or set white) in a given feature image preferably corresponds to the position in intensity image 100 of the detected edges associated with that feature image.

In an alternate embodiment, each edge detected by detectors 210, 220 is classified as being angularly oriented in one or two of at least three partially overlapping directional ranges. In this embodiment, the preferred degree of overlap is approximately 5 degrees on either side of each directional range, although other amounts of overlap may be used. Thus, each detected edge may be classified as being oriented in (i) a first directional range within 35 degrees on either side of the 0 degree axis, (ii) a second directional range within 35 degrees on either side of the 60 degree axis and/or (iii) a third directional range within 35 degrees on either side of the 120 degree axis. A detected edge will be classified in only one directional range if it is not oriented in one of the overlapping range portions. Similarly, a detected edge will be classified in two directional ranges if it is oriented in an overlapping range portion. As in the paragraph immediately above, for each directional range, means 310 associates the detected edges oriented in that directional range with a corresponding feature image.

In a still further embodiments, means 310 may classify detected edges into other directional ranges of differing size or direction. In addition, at least two and more than three directional ranges may be used to classify the detected edges. For example, edge detectors 230, 240, 250, 260 may be used by means 310 to classify each edge from an imaged region into one of the four directional ranges associated with those edge detectors.

Means 310 is preferably formed from means 310a for forming at least two binary images and means 310b for generating at least two feature images from the output of means 310a. Referring now to Figure 3A, there is shown a flow diagram illustrating the operation of means 310a for forming at least two binary images, wherein each of the at least two binary images formed corresponds to one of at least two directional ranges of detected edges. Means 310a accepts as its input magnitude information and directional information for each edge detected by means 200. Means 311 is provided for selecting a detected edge for processing. Means 312 compares the magnitude information corresponding to the selected edge to a first predetermined threshold $(T_1)$. If it is determined that the magnitude information corresponding to the selected edge exceeds $T_1$, means 313 selects from at least two directional ranges the one directional range corresponding to the direction of the selected edge. If the magnitude information exceeds $T_1$, means 313 also selects from at least two binary images the one binary image corresponding to the selected directional range. Means 314 then sets high the pixel in the selected binary image which corresponds in position to the position of the selected edge in intensity image 100. Means 315 is provided for repeating this process from means 311 for each detected edge.

In an alternate preferred embodiment used for processing detected edges which are to be classified in one or two of at least three partially overlapping directional ranges, means 313 selects from at least three directional ranges the one or two directional ranges corresponding to the direction of the selected edge. In this embodiment, means 313 also selects from at least three binary images the one or two binary images corresponding to the selected directional range(s). Means 314 then sets high the pixel(s) in the selected binary image(s) which correspond in position to the position of the selected edge in intensity image 100.

In a still further preferred embodiment, means 310 accepts as input magnitude information determined by each of edge detectors 230, 240, 250, 260. The magnitude information corresponding to each detected edge is then compared against $T_1$. For each edge detected by detector 230 with a magnitude exceeding $T_1$, a binary pixel is set high in a first binary image. The position of the binary pixel set high corresponds to the position in intensity image 100 of the edge represented by that binary pixel. Similarly, for each edge detected by detector 240 with a magnitude exceeding $T_1$, a corresponding binary pixel in a second binary image is set high; for each edge detected by detector 250 with a magnitude

exceeding $T_1$, a corresponding binary pixel in a third binary image is set high; and for each edge detected by detector 260 with a magnitude exceeding $T_1$, a corresponding binary pixel in a fourth binary image is set high.

Figure 6A shows an exemplary low resolution intensity image (610) for processing by the object locator system of the present invention. Figure 6B shows four binary images which resulted from application of edge detectors 230, 240, 250, 260 to the intensity image of Figure 6A. Thus, the white pixels in first binary image 620 represent edges detected by detector 230 with magnitudes exceeding $T_1$ and angular orientations in the directional range within 22.5 degrees on either side of the 0 degree axis; the white pixels in second binary image 622 represent edges detected by detector 240 with magnitudes exceeding $T_1$ and angular orientations in the directional range within 22.5 degrees on either side of the 45 degree axis; the white pixels in third binary image 624 represent edges detected by detector 250 with magnitudes exceeding $T_1$ and angular orientations in the directional range within 22.5 degrees on either side of the 90 degree axis; and the white pixels in fourth binary image 626 represent edges detected by detector 260 with magnitudes exceeding $T_1$ and angular orientations in the directional range within 22.5 degrees on either side of the 135 degree axis.

In a preferred embodiment, means 310b subjects each of the at least two binary images output by means 310a to a filtering process referred to as weighed morphology or "majority dilation/minority erosion". This process is used "dilate" areas in each binary image where the concentration of pixels set high exceeds a second predetermined threshold ($T_2$), and to "erode" areas in each binary image where the concentration of binary pixels set high does not exceed $T_2$. In a preferred embodiment of means 310b, this majority dilation/minority erosion process is also used to simultaneously perform "subsampling" on each binary image. According to this embodiment, each of the at least two binary images is divided into a plurality of regions or blocks. For example, a binary image 782 x 1288 pixels in dimension would preferably be divided into pixel blocks 8 x 8 pixels in size. Next, the concentration of binary pixels set high in each block of the plurality of blocks is determined and compared against $T_2$. An output binary image (or feature image) is then formed by representing each block from the binary image with a single binary pixel in the feature image. The single binary pixel in the feature image is set high when the corresponding block in the binary image has a determined concentration which exceeds $T_2$. The single binary pixel in the feature image is set low when the corresponding block in the binary image has a determined concentration which does not exceed $T_2$. Since a single binary pixel is used in a feature image to represent each 8 x 8 block of pixels in a binary image, a feature image which is 97 x 161 pixels in dimension will be formed from a binary image which is 782 x 1288 pixels in dimension.

Referring now to Figure 3B, there is shown a flow diagram of means 310b for generating at least two feature images from at least two binary images according to the majority erosion/minority erosion process described above. In the embodiment shown, means 316 is provided for tiling each of the binary images into a plurality of blocks. One block from the plurality of tiled blocks is then selected by means 317 and the number of binary pixels set high in the selected block is determined by pixel counter means 318. Comparing means 319 is provided for comparing the number of pixels determined by means 318 to $T_2$. If the number of binary pixels set high in the selected block exceeds $T_2$, then means 320 sets a corresponding binary pixel in a corresponding feature image high (or white). If the number of binary pixels set high in the selected block does not exceeds $T_2$, then means 321 sets a corresponding binary pixel in a corresponding feature image low (or black). Means 322 is provided for repeating this process from means 317 for each tiled block. Figure 6C shows four exemplary feature images 630, 632, 634, 636 which respectively resulted from the application of the majority dilation/minority erosion process of Figure 3B to binary images 620, 622, 624, 626 of Figure 6B.

In an alternate preferred embodiment of means 310b, a "sliding" window is applied to each of the at least two binary images. The sliding window is, for example, an 8 x 8 block of pixels. This window is first applied to the 8 x 8 block of pixels in the upper left hand corner of a selected binary image. The number of pixels set high in the window is compared against $T_2$. If the number of pixels in the window set high exceeds $T_2$, then a corresponding binary pixel in a corresponding feature image is set high; otherwise, the corresponding binary pixel in the corresponding feature image is set low. The window is then moved one pixel to the right and the process is repeated. This process continues until the right side of the sliding window reaches the right side of the selected binary image. At this point, the window is moved downward by one pixel and over to the left most column of pixels. This process is repeated until the sliding window reaches the bottom right hand corner of the selected binary image.

In a still further preferred embodiment of means 310b, the majority dilation/minority erosion process is achieved by first dividing each of the at least three binary images into a plurality of regions. Next, the concentration of binary pixels set high in each region of the plurality of regions is determined and compared against $T_2$. In each region where the determined concentration exceeds $T_2$, a pixel cluster region is formed by setting all binary pixels in that region high (or white). In each region where the determined concentration does not exceed $T_2$, a blank region is formed by setting all binary pixels in that region low (or black).

The output of feature image generator 310 is provided to composite feature image generator 330. Figure 3C is a flow diagram illustrating the operation of a preferred composite feature image generator. In a preferred embodiment, first, second, third and fourth feature images are provided to means 330. The first feature image having been determined from a first binary image representing edges orientated in the directional range within 22.5 degrees on either side of the 0 degree axis; the second feature image having been determined from a second binary image representing edges orientated in the directional range within 22.5 degrees on either side of the 45 degree axis; the third feature image having been determined from a third binary image representing edges orientated in the directional range within 22.5 degrees on either side of the 90 degree axis; and the fourth feature image having been determined from a fourth binary image representing edges orientated in the directional range within 22.5 degrees on either side of the 135 degree axis.

Referring still to Figure 3C, pixel selector means 331a, 331b, 331c, 331d are provided for selecting corresponding binary pixels from the first, second, third and fourth feature images. First ORing means 332a is provided for performing an exclusive logical OR operation on a binary pixel in the first feature image and a corresponding binary pixel in the third feature image, and second ORing means 332b is provided for performing an exclusive logical OR operation on a binary pixel in the second feature image and a corresponding binary pixel in the fourth feature image. The outputs of first ORing means 332a and second ORing means 332b are provided to third ORing means 333 where they are compared on a pixel by pixel basis. More particularly, means 333 performs a logical OR operation on its inputs and sets either high or low a corresponding binary pixel in a composite feature image depending on the result of the OR operation. The binary pixel set in the composite feature image corresponds in position to the position within each of the four feature images of the binary pixels selected by means 331a, 331b, 331, 331d. Figure 6D shows an exemplary composite feature image 640 which resulted from the application of the process of Figure 3C to feature images 630, 632, 634, 636 of Figure 6C.

Referring now to Figure 3D, there is shown an alternative composite feature image generator wherein only two feature images are provided to means 330. Pixel selector means 335a, 335b, are provided for selecting corresponding binary pixels from each of first and second feature images. Pixel comparator means 336 is provided for setting high a binary pixel in a composite feature image if only one of the two selected corresponding binary pixels is set high. In a further alternative embodiment (not shown) wherein three feature images are provided to means 330 and three corresponding binary pixels are selected from each of first, second and third feature images, pixel comparator means 336 sets high a binary pixel in a composite feature image if only one or only two of the three selected corresponding binary pixels are set high. The pixel set high in the composite feature image corresponds in position to the position within each of the feature images of the selected corresponding binary pixels. This process is repeated on a pixel by pixel basis for each group of corresponding pixels in the feature images.

A still further alternative embodiment of a composite feature image generator is shown in Figure 3E. In the embodiment shown, N feature images are provided to the composite feature image generator, wherein N is greater than or equal to two. Means 340 are provided for selecting a corresponding pixel from each of M feature images, wherein M is greater than or equal to two and less than or equal to N (for bar code symbols, M is preferably two). At least one of the M selected corresponding binary pixels is preferably from feature images representing edges oriented in subsequent directional ranges. For example, where M is two and there are first, second, third and fourth (N=4) feature images respectively representing detected edged in a first directional range of 22.5 degrees on either side of the 0 degree axis, a second directional range of 22.5 degrees on either side of the 45 degree axis, a third directional range of 22.5 degrees on either side of the 90 degree axis and a fourth directional range on either side of the 135 degree axis, the two selected corresponding binary pixels are preferably from either the first and second, or the second and third, or the third and fourth, or the fourth and first feature images. Means (not shown) are also provided for selecting a pixel from a composite feature image; the selected pixel in the composite feature image corresponds in position to the position within each of the M feature images of the selected corresponding binary pixels. The selected pixel from the composite feature image is then set high by pixel comparator 342 if at least one of the M selected corresponding binary pixels is set high and less than all of the M selected corresponding binary pixels are set high. This process is repeated on a pixel by pixel basis for each pixel in the composite feature image.

The output of composite feature image generator 330 is provided to pixel cluster region generator 350. Pixel cluster region generator 350 filters the composite feature image using a modified version of the majority dilation/minority erosion described above. In particular, pixel cluster region generator 350 is used to "dilate" areas in the composite feature image where the concentration of pixels set high exceeds a third predetermined threshold $(T_3)$, and to "erode" areas in the composite feature image where the concentration of binary pixels set high does not exceed $T_3$. In a preferred embodiment of pixel cluster region generator 350, this majority dilation/minority erosion process is achieved by applying a "sliding" window to the input composite feature image. More particularly, in the sliding window operation of pixel cluster region generator 350, a window (preferably 3 x 3 pixels in dimension) is first applied to the pixels in the upper left hand corner of the input composite feature image. Thus, if a window 3 x 3 pixels in dimension were employed, it would first be applied to the 3 x 3 block of pixels in the upper left hand corner of the input composite feature image. The number of pixels set high in the window is compared against $T_3$. If the number of pixels in the window set high exceeds $T_3$, then a corresponding pixel positioned in the center of the 3 x 3 window will be set high in the output composite feature image; otherwise, the corresponding pixel in the output composite feature image will be set low. The window is then moved one pixel to the right and the process is repeated. This process continues until the right side of the window reaches the right side of the input composite feature image. At this point, the window is moved downward one pixel and over to the left most column of pixels in the input composite feature image. This process is repeated until the sliding window reaches the bottom righthand corner of the input composite feature image. Figure 6E shows an exemplary output composite feature image (650) which resulted from the application of the majority dilation/minority erosion process described above to composite feature image 640 of Figure 6D.

In an alternative preferred embodiment of pixel cluster region generator 350, the majority dilation/minority erosion process is achieved by first dividing the composite feature image into a plurality of regions. Next, the concentration of binary pixels set high in each region of the plurality of regions is determined and compared against $T_3$. In each region where the determined concentration exceeds $T_3$, a pixel cluster region is formed by setting all binary pixels in that region high (or white). In each region where the determined concentration does not exceed $T_3$, a blank region is formed by setting all binary pixels in that region low (or black).

Referring now to Figure 3F, there is shown a flow diagram of a pixel cluster region generator for processing a composite feature image according to the majority dilation/minority erosion process described in the paragraph immediately above. Means 352 is provided for tiling each of the composite feature image into a plurality of blocks. One block from the plurality of tiled blocks is then selected by means 354 and the number of binary pixels set high in the selected block is determined by pixel counter means 356. Comparing means 358 is provided for comparing the number of pixels determined by means 356 to $T_3$. If the number of binary pixels set high in the selected block exceeds $T_3$, then means 360 sets all binary pixels in the selected block high. If the number of binary pixels set high in the selected block does not exceed $T_3$, then means 362 sets all binary pixels in the selected block low. Means 364 is provided for repeating this process from means 354 for each tiled block.

The output of edge information comparator 300 is provided to means 400 for selecting at least one foreground region from intensity image 100. Means 400 selects at least one foreground region wherein detected edges are angularly oriented substantially in accordance with a target orientation. In a first preferred embodiment, a foreground region selected by means 400 will typically correspond in location to the position of a bar code symbol or a stacked bar code symbol in intensity image 100. In this first embodiment, foreground region selector 400 preferably selects a foreground region with detected edges having a target orientation wherein (i) substantially all the detected edges are angularly oriented in only one or only two of four directional ranges, (ii) substantially all the detected edges are angularly oriented in only one of at least two directional ranges, or (iii) detected edges angularly oriented within at least one and less than all of at least two directional ranges are substantially present. The composite feature image generators shown in Figures 3C, 3D, 3E are respectively directed to the formation of composite feature images which facilitate the selection by means 400 of foreground regions in accordance with the above three target orientations.

In a second preferred embodiment, a foreground region selected by means 400 will typically correspond in location to the position of a symbol comprised of a matrix of squares. In this second embodiment, foreground region selector 400 selects at least one foreground region from an intensity image wherein a substantial percentage of detected edges in the foreground region are orthogonal with respect to each other. By selecting foreground regions in accordance with a target orientation of orthogonal edges, foreground region selector 400 may locate within an intensity image symbols coded in accordance with the Vericode™ or Datacode™ symbologies. Details of the Vericode™ and Datacode™ symbologies are disclosed in U.S. Patent Nos. 4,924,078 and 4,939,154. A composite feature image useful for selecting foreground regions having orthogonal edges may be formed by comparing feature images corresponding to directional ranges oriented 90 degrees apart.

In a third preferred embodiment, a foreground region selected by means 400 will typically correspond in location to the position of a symbol comprised of a matrix of hexagons. In this third embodiment, foreground region selector 400 selects at least one foreground region from an intensity image wherein a substantial percentage of detected edges in the foreground region are oriented at 60 degrees with respect to each other. By selecting foreground regions in accordance with a target orientation of edges oriented at 60 degrees with respect to each other, foreground region selector 400 may locate within an intensity image symbols coded in accordance with the UPSCode™ symbology. Details of the UPSCode™ symbology are disclosed in U.S. Patent Nos. 4,998,010, 4,896,029 and 4,874,936. A composite feature image useful for selecting foreground regions having edges oriented at 60 degrees with respect to each other may be formed by comparing feature images corresponding to directional ranges oriented 60 degrees apart.

In an alternate preferred embodiment of the object locator system, means 400 for selecting at least one foreground region is comprised of (i) first means for selecting at least one foreground region in the intensity image wherein detected edges are angularly oriented substantially in accordance with a first target orientation, and (ii) second means for selecting at least one foreground region in the intensity image wherein detected edges are angularly oriented substantially in accordance with a second target orientation. This embodiment may be employed to process a packaging label encoded with two different types of symbologies. An exemplary packaging label encoded with both one-dimensional bar code symbols (710) and (720) and a two-dimensional code symbol (730) formed from an array of hexagons is shown in Figure 7. Other one-dimensional symbols including stacked bar code symbols, and other two-dimensional symbols including square arrays and arrays of other polygonal shapes, may be positioned on the same label and then located as described above.

Foreground region selector 400 may be provided with means for processing the composite feature image prior to selecting at least one foreground region. This preferred processing step is shown in Figure 4 and employs means 410 for connecting at least two neighboring pixels in the composite feature image to form at least one connected region. Means 410 connects neighboring pixels by applying either an eight neighbor connectivity operator (410a) or a four neighbor connectivity operator (410b) throughout the composite feature image. Means 420 for calculating the area of each connected region and means 430 for comparing each calculated area to a fourth predetermined threshold ($T_4$) and a fifth predetermined threshold ($T_5$) are also provided. Means 430 filters out of the composite feature image each connected region with an area below $T_4$ or above $T_5$. At least one foreground region is then selected by means 400 from the remaining unfiltered connected regions. In the first preferred embodiment discussed above for selecting bar code or stacked bar code symbols, the comparison against $T_4$ and $T_5$ is used to eliminate from the selection process those potential foreground regions which are either too small or too large to comprise a bar code or stacked bar code symbol.

The output from foreground selection means 400 may be provided to means 500 for extracting image information representative of at least one object from intensity image 100. Means 500 includes means 510 for mapping at least one selected foreground region onto intensity image 100 to form at least one object region in intensity image 100, and means 520 for extracting gray scale pixels representative of said at least one object region.

The object locator system may be employed to locate bar code symbols and other types of symbols affixed to packages positioned on a moving belt. In Figure 8, there is shown means 800 for associating each foreground region selected by means 400 with a particular package. Means 800 performs a preferred pre-processing step which allows to tie together (or associate) a plurality of symbols (for example symbols 710, 720, 730) which are affixed to the same package. Means 800 includes means 810 for determining the contour or outline of each package on a belt. As shown in Figure 8A, belt 830 (which is preferably colored black) appears as a large contiguous dark region when canned; a package 840, however, appears as a contiguous bright region when scanned. Means 810 preferably determines contour 850 of package 840 by application of either a contour tracing algorithm or a connectivity operator to intensity image 100. Means 820 is provided for comparing a contour with a foreground region selected by means 400. Means 830 then associates a foreground region selected by means 400 with a package if that foreground region is positioned within the contour corresponding to that package.

The present invention may be implemented on a Datacube™ Maxvideo™ system. When edge magnitude information normalized to range from 0-127 has been determined for each pixel in an exemplary intensity image formed of 782 x 1288 8-bit pixels, suitable values of $T_1$, $T_4$ and $T_5$ are 24, 128 and 2048 respectively. When these parameters are used and the blocks tiled by means 316 are 8 x 8 pixels in dimension and the sliding window used by pixel cluster region generator 350 is 3 x 3 pixels in dimension, suitable values of $T_2$ and $T_3$ are 24 and 6 respectively.

## Object Positioning And Orientation System

Referring now to Figure 9, there is shown a flow diagram illustrating the operation of a preferred embodiment of a system for determining the orientation of an object within an intensity image. The system accepts as its input intensity image 910 which is preferably a digitized gray scale representation of an imaged region being scanned. In the preferred embodiment, intensity image 910 is a low resolution image derived from a linear array of CCDs. The system shown includes means 920 for analyzing intensity image 910 with at least two different edge detectors to detect a multiplicity of edges oriented in at least two directional ranges. Means 920 functions substantially the same as means 200 described above. Means 930 is provided for comparing information representative of detected edges angularly oriented in a first of said at least two directional ranges and information representative of detected edges angularly oriented in a second of said at least two directional ranges. Means 930 functions substantially the same as means 300 described above. Based on the results of comparisons made by means 930, means 940 selects an acquisition region from intensity image 910 wherein detected edges are angularly oriented substantially in accordance with a target orientation. Means 950 then determines the position and orientation of at least one object in intensity image 910 in accordance with the selected acquisition region.

The output of means 930 is provided to means 940 for selecting an acquisition from intensity image 910. Means 940 selects an acquisition region wherein detected edges are angularly oriented substantially in accordance with a target orientation. Means 940 functions substantially the same as means 400 described above, except means 940 selects an acquisition region as opposed to a foreground region. Thus, the acquisition region selected by means 940 may correspond in location to (i) the position of a bar code symbol or a stacked bar code symbol in intensity image 910, (ii) the position of a symbol comprised of a matrix of squares in intensity image 910, or (iii) the position of a symbol comprised of a matrix of hexagons or other polygons in intensity image 910.

Means 950 determines the orientation of at least one object in intensity image 910 in accordance with the acquisition region selected by means 940. In a preferred embodiment, the acquisition region selected by means 940 has a known spatial relationship to at least one object in intensity image 910. For example, in the label of Figure 7, symbols 710, 720, 730 will preferably have a predetermined spatial relationship which is known to means 950. Thus, if an acquisition region representative of symbol 730 is selected, means 950 can determine the position of symbols 710, 720 by application of a known spatial relationship to the selected acquisition region. Alternatively, a bar code symbol (such as 710) may be used by means 950 to find (or acquire) either another bar code symbol (such as 720) or a two-dimensional symbol (such as 730) or a text block (such as 740) within intensity image 910.

Referring now to Figure 10, there is shown a flow diagram illustrating the operation of a system for determining bar widths from a two-dimensional image 1000 representative of a bar code symbol. In a preferred embodiment, image 1000 is a low resolution image formed of gray scale pixels which have been extracted from intensity image 100 by means 520. The system shown includes means 1010 for forming a one-dimensional intensity projection signal from two-dimensional image 1000, means 1020 for globally scaling the projection signal, means 1030 for locally scaling the projection signal, means 1040 for resolving undefined points in the projection signal, means 1050 for calculating the areas of a plurality of regions described by the projection signal and means 1060 for determining a plurality of bar widths from the areas calculated by means 1050.

Figure 11 shows an exemplary low resolution image 1100 to be processed by an image processing system. Low resolution image 1100 is representative of a bar code symbol having bars oriented parallel to the bar direction shown by arrow 1102. Bar direction 1102 is determined either from (i) finder points (not shown) in the quiet zone of the bar code symbol, (ii) through the application of equation (2) above to the edges of image 1100 of (iii) by computing the major axis of image 1100.

Image 1000 is divided into a plurality of two-dimensional sections (or bins) 1104, 1106. Bins 1104, 1106 are aligned along an axis perpendicular to bar direction 1102 and parallel to bin axis 1108. Thus, bin 1104 is bounded on its top and bottom by reference lines 1110, 1112 and on its left and right by reference lines 1114, 1116. Similarly, bin 1106 is bounded on its top and bottom by reference lines 1110, 1112 and on its left and right by reference lines 1116, 1118.

Then, information representative of the intensity of the pixels in each bin 1104, 1106 is determined. This intensity information determination is preferably made for a given bin by calculating the average intensity of all pixels in that bin. Means 1010 then forms a one-dimensional projection signal by plotting this intensity information for each bin 1104, 1106 along the bin axis. Figure 12A shows an exemplary one-dimensional projection signal derived from a low resolution image representative of a bar code symbol in accordance with the method described above. By originally calculating each point in the projection signal from a two-dimension section (or bin), it was found that the present image processing system could be used to recover bar widths even from a corrupted bar code symbol which included a defect such as 1120.

The output of means 1010 is provided to means 1020 for performing a first global scaling operation on a projection signal in accordance with a minimum global scaling parameter and a maximum global scaling parameter. Means 1020 includes means for determining a plurality of local maximum values (1202, 1204) from the projection signal, and means for determining a plurality of local minimum values (1206, 1208) from the projection signal. In the preferred embodiment, a local maximum value is determined at each peak in the projection signal, and a local minimum value is determined at the bottom of each valley in the projection signal. Means 1020 determines a maximum global scaling parameter ($P_{max}$) by averaging the local maximum values determined above, and a minimum global scaling parameter ($P_{min}$) by averaging the local minimum values determined above.

Means 1020 globally scales the projection signal by "stretching" the projection signal so that it extends along its entire dynamic range. In a preferred embodiment of the first global scaling method, all values of the projection signal exceeding $P_{max}$ are first rectified to $P_{max}$, and all values of the projection signal below $P_{min}$ are rectified to $P_{min}$. Means then 1020 globally scales each pixel (P) in the rectified projection signal according to equation (3) below:

$$P_{GS} = P * (\text{dynamic range}) / (P_{max} - P_{min}) \quad (3)$$

The exemplary projection signal of Figure 12A was determined from an image formed of 8-bit pixels having a dynamic range from 0 to 255. Figure 12B shows an exemplary projection signal derived from the application of the first global scaling method described above to the projection signal of Figure 12A.

The output of means 1020 is provided to means 1030 for locally scaling a projection signal in accordance with the local maximum and minimum values determined above. Means 1030 includes means for positioning a sliding window (1210) on pixels from the globally scaled projection signal, means for calculating a contrast value for pixels in the window, means for locally scaling pixels in the window and means for marking pixels in the window as undefined. As shown in equation (4) below, means 1030 calculates a contrast value ($C_{win}$) for pixels in the sliding window by subtracting the maximum value ($Max_{win}$) in the window from the minimum value in the window ($Min_{win}$) and dividing this amount by the maximum of the dynamic range:

$$C_{win} = (Max_{win} - Min_{win}) / (dynamic\ range) \qquad (4)$$

Means 1030 then compares $C_{win}$ against a sixth predetermined threshold ($T_6$). If $C_{win}$ is greater than $T_6$, then means 1030 locally scales the pixels in the window; otherwise, means 1030 marks the pixels in the window as undefined. In a preferred embodiment, after the pixels in window 1210 are processed as above, the window is moved to the right by one bin and the process is repeated. The process continues for the full length of the projection signal.

Means 1030 locally scales the pixels in a window by "stretching" the pixels in the window so that they extend along the entire dynamic range. In a preferred embodiment, means 1030 locally scales each pixel (P) in a window according to equation (5) below:

$$P_{LS} = P * (dynamic\ range) / (Max_{win} - Min_{win}) \qquad (5)$$

The output of means 1030 is provided to means 1040 for resolving any pixels marked undefined by means 1030. In a preferred embodiment, means 1040 resolves a pixel marked undefined by linearly interpolating between the closest defined pixels on either side of the undefined pixel. Figure 12C shows an exemplary projection signal derived from the application of the local scaling and interpolation methods described above to the projection signal of Figure 12B. In determining the projection signal of Figure 12C, a window (or bin) width of approximately 5 pixels was employed and $T_6$ was set to approximately 15% of the full dynamic range. In the preferred embodiment, means 1040 also performs a second global scaling operation following the linear interpolation step described above. In this second global scaling operation, any peaks (1206) or valleys (1208) not spanning the full dynamic range are stretched to the limits of the dynamic range. Figure 12D shows an exemplary projection signal derived from the application of this second global scaling method to the projection signal of Figure 12C.

The output of means 1040 is provided to means 1050 for calculating the areas of a plurality of regions described by the projection signal. Referring now to Figure 12E, there is shown an expanded view of the projection signal of Figure 12D. Means 1050 calculates a value representative of each area 1051, 1052, 1053, 1054, 1055, 1056 bounded by the projection signal. In the projection signal shown in Figure 12E, every area is alternatively representative of either a black or a white bar. Thus, areas 1051, 1053, 1055 are representative of black bars, and areas 1052, 1054, 1056 are representative of white bars. The widths of the bars in the bar code symbol being processed are determined from the calculated areas.

The present invention may be embodied in other specific forms without departing from the scope of the invention. Accordingly, reference should be made to the appended claims, rather than the foregoing specification, as indicating the scope of the invention.

**Claims**

1. A method for locating at least one object within an intensity image (100), comprising the steps of:

> (A) analyzing (200) said intensity image with at least two different edge detectors to detect a multiplicity of edges oriented in at least two directional ranges;
> (B) comparing (300) and combining information representative of detected edges angularly oriented in a first of said at least two directional ranges and information representative of detected edges angularly oriented in a second of said at least two directional ranges to form a composite feature image; and
> (C) selecting (400) at least one foreground region, by using at least one connected region formed from said composite feature image, in said intensity image wherein said detected edges are angularly oriented substantially in accordance with a target orientation.

2. The method of claim 1, wherein step (C) comprises the step of selecting at least one foreground region wherein detected edges angularly oriented within at least one and less than all of said at least two directional ranges are substantially present.

3. The method of claim 2, wherein the location of said at least one object corresponds to the position of said at least one foreground region.

**4.** The method of claim 3, wherein step (C) comprises the step of selecting at least one foreground region wherein a substantial percentage of detected edges are angularly oriented within a single directional range.

**5.** The method of claim 4, wherein two of said at least two directional ranges are partially overlapping.

**6.** The method of claim 4, wherein said at least one foreground region contains a single bar code symbol.

**7.** The method of claim 4, wherein said at least one foreground region contains a stacked bar code symbol.

**8.** The method of claim 1, wherein step (C) comprises the step of selecting at least one foreground region wherein a substantial percentage of detected edges are orthogonal with respect to each other.

**9.** The method of claim 8, wherein said at least one foreground region contains a matrix of squares.

**10.** The method of claim 1, wherein step (C) comprises the step of selecting at least one foreground region wherein a substantial percentage of detected edges are oriented at 60 degrees with respect to each other.

**11.** The method of claim 10, wherein said at least one foreground region contains a matrix of hexagons.

**12.** The method of claim 1, wherein step (B) further comprises the steps of:

(1) generating (310) at least two feature images by associating each edge detected in step (A) with one of said at least two directional ranges, wherein each of said at least two feature images is associated with a corresponding one of said at least two directional ranges; and
(2) forming (330) said composite feature image by comparing pixels in a first feature image of said at least two feature images and pixels in a second feature image of said at least two feature images.

**13.** The method of claim 12, wherein step (B) (1) comprises the steps of:

(a) forming at least two binary images, each of said at least two binary images corresponding to one of said at least two directional ranges; and
(b) generating said at least two feature images from said at least two binary images.

**14.** The method of claim 13, wherein step (A) further comprises determining magnitude information and a directional range for each of said detected edges and step (B)(1)(a) comprises the steps of:

(i) selecting (311) one of said detected edges for processing;
(ii) comparing (312) said magnitude information corresponding to said selected edge to a first predetermined threshold and, if said magnitude information exceeds said first predetermined threshold then

(a) selecting (313) one of said at least two directional ranges which includes said directional range of said selected edge;
(b) selecting one of said at least two binary images corresponding to said selected directional range; and
(c) setting high (314) a binary pixel in said selected binary image, said binary pixel holding a position in said selected binary image corresponding to the position of said selected edge in said intensity image;

(iii) repeating steps (i)-(ii) for each of said detected edges.

**15.** The method of claim 14, wherein step (B)(1)(b) comprises the steps of:

(i) dividing each of said at least two binary images into a plurality of regions;
(ii) determining the concentration of pixels set high in each region of said plurality of regions;
(iii) forming a pixel cluster region in each region of said plurality of regions where said concentration of binary pixels set high exceeds a second predetermined threshold; and
(iv) forming a blank region in each region of said plurality of regions where said concentration of binary pixels set high does not exceed said second predetermined threshold.

**16.** The method of claim 14, wherein step (B)(1)(b) comprises the steps of:

(i) tiling (316) each of said at least two binary images into a plurality of blocks;
(ii) selecting (317) one block of said plurality of blocks;
(iii) determining (318) the number of binary pixels in said selected block set high in step (B)(1)(a)(ii)(c);
(iv) comparing (319) said number of binary pixels to a second predetermined threshold;
(v) if said number of binary pixels exceeds said second predetermined threshold then

setting (320) high a single binary pixel in an output binary image

otherwise

setting (321) low a single binary pixel in an output binary image; and

(vi) repeating steps (ii)-(v) for each remaining block of said plurality of blocks.

17. The method of claim 12, wherein step (B)(2) comprises the steps of:

(a) selecting a corresponding pixel from each of said at least two feature images;
(b) if only one of said selected corresponding pixels is set high, or if only one or only two of said selected corresponding pixels in three feature images are set high, then setting high a pixel in said composite feature image, wherein said pixel set high in said composite feature image corresponds in position to the position of said selected corresponding pixels within each of said at least two feature images; and
(c) repeating steps (a) - (b) for each group of corresponding pixels remaining in said at least two feature images.

18. The method of claim 12, wherein there are provided N feature images, wherein N is greater than or equal to two and step (B)(2) comprises the steps of:

(a) selecting (340) a corresponding pixel from each of M selected feature images, wherein M is greater than or equal to two and less than or equal to N;
(b) selecting a pixel from said composite feature image, wherein said selected pixel in said composite feature image corresponds in position to the position of said M corresponding pixels within said M selected feature images;
(c) if at least one of said M selected corresponding pixels is set high and less than all of said M selected corresponding pixels are set high, then setting high said selected pixel in said composite feature image; and
(d) repeating steps (a) - (c) for each remaining pixel in said composite feature image.

19. The method of claim 12, wherein there are provided first, second, third and fourth feature images, and step (B)(2) comprises the steps of:

(a) for each pixel in said first feature image, performing an exclusive logical OR operation (332a) on said pixel and a corresponding pixel in said third feature image;

(b) for each pixel in said second feature image, performing an exclusive logical OR operation (332b) on said pixel and a corresponding pixel in said fourth feature image; and
(c) logically ORing (333) on a pixel by pixel basis the results of steps (B)(2)(a) and (B)(2)(b) to form said composite feature image.

20. The method of claim 12, wherein step (B) further comprises the steps of:

(3) positioning a sliding window at the upper left hand corner of said composite feature image;
(4) determining the concentration of pixels set high in said sliding window;
(5) comparing said concentration to a third predetermined threshold;
(6) if said concentration exceeds said third predetermined threshold then

setting high a corresponding binary pixel in an output composite feature image

otherwise

setting low said corresponding binary pixel in said output composite feature image;

(7) moving said sliding window one pixel to the right;
(8) repeating steps (4) - (7) until said sliding window is positioned against the right side of said composite feature image;
(9) moving said sliding window downward by one pixel and over to the left-hand side of said composite feature image; and
(10) repeating steps (4) - (9) until said sliding window is positioned at the bottom right-hand corner of said composite feature image.

21. The method of claim 12, wherein step (B) further comprises the steps of:

(3) dividing (352) said composite feature image into a plurality of regions;
(4) determining (356) the concentration of pixels set high in each region of said plurality of regions;
(5) forming (360) a pixel cluster region in each region of said plurality of regions where said concentration of pixels set high exceeds a third predetermined threshold; and
(6) forming (362) a blank region in each region of said plurality of regions where said concentration of pixels set high does not exceed said third predetermined threshold.

22. The method of claim 12, wherein step (B) further comprises the steps of:

(3) tiling (352) said composite feature image into a plurality of blocks;
(4) selecting (354) one block of said plurality of blocks;
(5) determining (356) the number of pixels in said selected block set high;
(6) comparing (358) said number of pixels to a third predetermined threshold;
(7) if said number of pixels exceeds said third predetermined threshold then

setting (360) high all pixels in said selected block

otherwise

setting (362) low all pixels in said selected block; and

(8) repeating (364) steps (5)-(7) for each remaining block of said plurality of blocks.

23. The method of claim 20, wherein step (C) comprises the step of connecting at least two neighboring pixels in said output composite feature image to form at least one connected region, wherein said at least one foreground region is selected from said at least one connected region.

24. The method of claim 20, wherein step (C) comprises the steps of:

(1) connecting (410) neighboring pixels in said output composite feature image to form connected regions;
(2) calculating (420) the area of each of said connected regions;
(3) comparing the area of each of said connected regions to fourth and fifth predetermined thresholds;
(4) filtering (430) out of said output composite feature image each connected region with an area below said fourth predetermined threshold;
(5) filtering out of said output composite feature image each connected region with an area exceeding said fifth predetermined threshold; and

wherein said at least one foreground region is selected from at least one unfiltered connected region.

25. The method of claim 1, wherein step (C) comprises the steps of:

(1) selecting at least one foreground region in said intensity image wherein said detected edges are angularly oriented substantially in accordance with a first target orientation; and
(2) selecting at least one foreground region in said intensity image wherein said detected edges are angularly oriented substantially in accordance with a second target orientation.

26. The method of claim 25, wherein said first target orientation corresponds to the angular orientation of a one dimensional symbol.

27. The method of claim 26, wherein said second target orientation corresponds to the angular orientation of a two dimensional symbol.

28. The method of claim 27, wherein said one dimensional symbol is selected from the group consisting of bar code and stacked bar code symbols and said two dimensional symbol is selected from the group consisting of arrays of squares and arrays of hexagons.

29. The method of claim 1, further comprising the step of:

(D) extracting image information representative of said at least one object from said intensity image.

30. The method of claim 29, wherein step (D) comprises the steps of:

(1) mapping (510) said at least one foreground region onto said intensity image to form at least one object region in said intensity image; and
(2) extracting (520) pixels representative of said at least one object region.

31. The method of claim 1, further comprising the step of:

(D) associating said at least one foreground region with a package.

32. The method of claim 31, wherein step (D) comprises the steps of:

(1) determining (810) a contour corresponding to an outline of said package;
(2) comparing (820) said contour with said at least one foreground region; and
(3) associating said at least one foreground region with said package if said at least one foreground region is positioned within said contour.

33. An apparatus for locating at least one object within an intensity image (100), comprising:

(A) means (200) for analyzing said intensity image with at least two different edge detectors to detect a multiplicity of edges oriented in at least two directional ranges;

(B) first comparing and combining means (300) for comparing and combining information representative of detected edges angularly oriented in a first of said at least two directional ranges and information representative of detected edges angularly oriented in a second of said at least two directional ranges to form a composite feature image; and

(C) means (400) for selecting at least one foreground region, by using at least one connected region formed from said composite feature image, in said intensity image wherein said detected edges are angularly oriented substantially in accordance with a target orientation.

34. The apparatus of claim 33, wherein said means for selecting (400) includes means for selecting at least one foreground region wherein detected edges angularly oriented within at least one and less than all of said at least two directional ranges are substantially present.

35. The apparatus of claim 34, wherein the location of said at least one object corresponds to the position of said at least one foreground region.

36. The apparatus of claim 35, wherein said means (400) for selecting includes means for selecting at least one foreground region wherein a substantial percentage of detected edges are angularly oriented within a single directional range.

37. The apparatus of claim 36, wherein two of said at least two directional ranges are overlapping.

38. The apparatus of claim 36, wherein said at least one object is a single bar code symbol (710).

39. The apparatus of claim 36, wherein said at least one object is a stacked bar code symbol.

40. The apparatus of claim 33, wherein said means for selecting includes means for selecting at least one foreground region wherein a substantial percentage of detected edges are orthogonal with respect to each other.

41. The apparatus of claim 40, wherein said at least one foreground region contains a matrix of squares.

42. The apparatus of claim 33, wherein said means for selecting includes means for selecting at least one foreground region wherein a substantial percentage of detected edges are oriented at 60 degrees with respect to each other.

43. The apparatus of claim 42, wherein said at least one foreground region contains a matrix of hexagons.

44. The apparatus of claim 33, wherein said first comparing means (300) further comprises:

(1) means (310) for generating at least two feature images by associating each of said detected edges with one of said at least two directional ranges, wherein each of said at least two feature images is associated with a corresponding one of said at least two directional ranges; and

(2) means (330) for forming said composite feature image by comparing pixels in a first feature image of said at least two feature images and pixels in a second feature image of said at least two feature images.

45. The apparatus of claim 44, wherein said means for generating at least two feature images comprises:

(a) means (311-315) for forming at least two binary images, each of said at least two binary images corresponding to one of said at least two directional ranges; and

(b) means (316-322) for generating said at least two feature images from said at least two binary images.

46. The apparatus of claim 45, wherein said means for analyzing further comprises means for determining magnitude information and a directional range for each of said detected edges and said means for forming at least two binary images comprises:

(i) means (311) for selecting one of said detected edges for processing;

(ii) second (312) comparing means for comparing said magnitude information corresponding to said selected edge to a first predetermined threshold;

(iii) means (313) for selecting one of said at least two directional ranges which includes said directional range of said selected edge if said magnitude information exceeds said first predetermined threshold;

(iv) means for selecting one of said at least two binary images corresponding to said selected directional range if said magnitude information exceeds said first predetermined threshold; and

(v) means (314) for setting high a binary pixel in said selected binary image if said magnitude information exceeds said first predetermined threshold, said binary pixel holding a position in said selected binary image corresponding to the position of said selected edge in said intensity image.

47. The apparatus of claim 46, wherein said means for generating said at least two feature images from said at least two binary images comprises:

(i) means for dividing each of said at least two binary images into a plurality of regions;
(ii) means for determining the concentration of pixels in each region of said plurality of regions;
(iii) means for forming a pixel cluster region in each region of said plurality of regions where said concentration of binary pixels set high exceeds a second predetermined threshold; and
(iv) means for forming a blank region in each region of said plurality of regions where said concentration of binary pixels set high does not exceed said second predetermined threshold.

48. The apparatus of claim 46, wherein said means for generating said at least two feature images from said at least two binary images comprises:

(i) means (316) for tilting each of said binary images into a plurality of blocks;
(ii) means (317) for selecting one block of said plurality of blocks;
(iii) means (318) for determining the number of binary pixels in said selected block set high;
(iv) third comparing means (319) for comparing said number of binary pixels to a second predetermined threshold;
(v) means (320) for setting high a single binary pixel in a feature image if said number of binary pixels exceeds said second predetermined threshold; and
(vi) means (321) for setting low a single binary pixel in a feature image if said number of binary pixels does not exceed said second predetermined threshold.

49. The apparatus of claim 44, wherein said means for forming said composite feature image comprises:

(a) means for selecting a corresponding pixel from each of said at least two feature images; and
(b) means for setting high a pixel in said composite feature image if only one of said selected corresponding pixels are set high, wherein said pixel set high in said composite feature image corresponds in position to the position of said selected corresponding pixels within each of said at least two feature images.

50. The apparatus of claim 44, wherein there are provided N feature images, wherein N is greater than or equal to two and said means for forming said composite feature image comprises:

(a) means (340) for selecting a corresponding pixel from each of M selected feature images, wherein M is greater than or equal to two and less than or equal to N;
(b) means for selecting a pixel from said composite feature image, wherein said selected pixel in said composite feature image corresponds in position to the position of said M selected corresponding pixels within said M selected feature images;
(c) means for setting high said selected pixel in said composite feature image if at least one of said M selected corresponding pixels is set high and less than all of said M selected corresponding pixels are set high.

51. The apparatus of claim 44, wherein there are provided first, second, third and fourth feature images, and said means for forming said composite feature image comprises:

(a) first ORing means (332a) for performing an exclusive logical OR operation on a pixel in said first feature image and a corresponding pixel in said third feature image;
(b) second ORing means (332b) for performing an exclusive logical OR operation on a pixel in said second feature image and a corresponding pixel in said fourth feature image; and
(c) means (333) for logically ORing on a pixel by pixel basis the results of said first and second ORing means to form said composite feature image.

52. The apparatus of claim 44, wherein said first comparing means further comprises:

(3) means for positioning a sliding window at the upper left-hand corner of said composite feature image;
(4) means for determining the concentration of pixels set high in said sliding window;
(5) means for comparing said concentration to a third predetermined threshold;
(6) means for setting high a corresponding binary pixel in an output composite feature image if said concentration exceeds said third predetermined threshold;
(7) means for setting low said corresponding binary pixel in said output composite feature image if said concentration does not exceed said third predetermined threshold; and
(8) means for moving said sliding window.

53. The apparatus of claim 44, wherein said first comparing means further comprises:

(3) means for dividing said composite feature image into a plurality of regions;
(4) means for determining the concentration of pixels set high in each region of said plurality of regions;
(5) means for forming a pixel cluster region in each region of said plurality of regions where said concentration of pixels set high exceeds a third predetermined threshold; and
(6) means for forming a blank region in each region of said plurality of regions where said concentration of pixels set high does not exceed said third predetermined threshold.

54. The apparatus of claim 44, wherein said first comparing means further comprises:

(3) means (352) for tiling said composite feature image into a plurality of blocks;
(4) means (354) for selecting one block of said plurality of blocks;
(5) means (356) for determining the number of pixels in said selected block set high;
(6) fourth (358) comparing means for comparing said number of pixels to a third predetermined threshold;
(7) means (360) for setting high all pixels in said selected block if said number of pixels exceeds said third predetermined threshold; and
(8) means (362) for setting low all pixels in said selected block if said number of pixels does not exceed said third predetermined threshold.

55. The apparatus of claim 52, wherein said means for selecting comprises means (410) for connecting at least two neighboring pixels in said output composite feature image to form at least one connected region, and wherein said at least one foreground region is selected from said at least one connected region.

56. The apparatus of claim 52, wherein said means for selecting comprises:

(1) means (410) for connecting neighboring pixels in said output composite feature image to form connected regions;
(2) means (420) for calculating the area of each of said connected regions;
(3) fifth (430) comparing means for comparing the area of each of said connected regions to fourth and fifth predetermined thresholds;
(4) means for filtering out of said output composite feature image each connected region with an area below said fourth predetermined threshold;

(5) means for filtering out of said output composite feature image each connected region with an area exceeding said fifth predetermined threshold; and

wherein said at least one foreground region is selected from at least one unfiltered connected region.

57. The apparatus of claim 33, wherein said means for selecting comprises:

(1) first means for selecting at least one foreground region wherein said detected edges are angularly oriented substantially in accordance with a first target orientation; and
(2) second means for selecting at least one foreground region wherein said detected edges are angularly oriented substantially in accordance with a second target orientation.

58. The apparatus of claim 57, wherein said first target orientation corresponds to the angular orientation of a one dimensional symbol.

59. The apparatus of claim 58, wherein said second target orientation corresponds to the angular orientation of a two dimensional symbol.

60. The apparatus of claim 59, wherein said one dimensional symbol is selected from the group consisting of bar code and stacked bar code symbols and said two dimensional symbol is selected from the group consisting of arrays of squares and arrays of hexagons.

61. The apparatus of claim 33, further comprising:

(D) means for extracting image information representative of said at least one object from said intensity image (100).

62. The apparatus of claim 61, wherein said means for extracting comprises:

(1) means (510) for mapping said at least one foreground region onto said intensity image to form at least one object region in said intensity image; and
(2) means (520) for extracting pixels representative of said at least one object region.

63. The apparatus of claim 33, further comprising:

(D) means for associating said at least one foreground region with a package.

64. The apparatus of claim 63, wherein said means for associating comprises:

(1) means (810) for determining a contour corresponding to an outline of said package;
(2) means (820) for comparing said contour with said at least one foreground region; and
(3) means for associating said at least one foreground region with said package if said at least one foreground region is positioned within said contour.

65. A method according to one of the claims 1 to 32, further comprising the step of:

(D) determining (950) the position and orientation of said at least one object in accordance with said foreground region.

66. The method of claim 65, wherein step (C) comprises the step of selecting an acquisition region wherein detected edges angularly oriented within at least one and less than all of said at least two directional ranges are substantially present.

67. The method of claim 66, wherein step (C) comprises the step of selecting a foreground region wherein a substantial percentage of detected edges are angularly oriented within a single directional range.

68. The method of claim 67, wherein said foreground region contains a bar code symbol.

69. The method of claim 65, wherein step (C) comprises the step of selecting a foreground region wherein a substantial percentage of detected edges are orthogonal with respect to each other.

70. The method of claim 65, wherein step (C) comprises the step of selecting a foreground region wherein a substantial percentage of detected edges are oriented at 60 degrees with respect to each other.

71. An apparatus according to one of the claims 33 to 64, further comprising:

(D) means (950) for determining the position and orientation of said at least one object in accordance with said foreground region.

72. The apparatus of claim 71, wherein said means (940) for selecting comprises means for selecting a foreground region wherein detected edges angularly oriented within at least one and less than all of said at least two directional ranges are substantially present.

73. The apparatus of claim 72, wherein said means for selecting comprises means for selecting a foreground region wherein a substantial percentage of detected edges are angularly oriented within a single directional range.

74. The apparatus of claim 73, wherein said foreground region contains a bar code symbol (710).

75. The apparatus of claim 71, wherein said means for selecting comprises means for selecting a foreground region wherein a substantial percentage of detected edges are orthogonal with respect to each other.

76. The apparatus of claim 71, wherein said means for selecting comprises means for selecting a foreground region wherein a substantial percentage of detected edges are oriented at 60 degrees with respect to each other.

**Patentansprüche**

1. Verfahren zum Lokalisieren zumindest eines Objekts innerhalb eines Intensitätsbilds (100), mit den Schritten:

(A) Analysieren (200) des Intensitätsbilds mit zumindest zwei unterschiedlichen Kantendetektoren, um mehrere Kanten zu detektieren, die in zumindest zwei Richtungsbereichen ausgerichtet sind;
(B) Vergleichen (300) und Kombinieren von Information, die erkannte Kanten darstellt, die winkelmäßig innerhalb eines ersten der zumindest zwei Richtungsbereiche orientiert sind, mit Information, die erfaßte Kanten darstellt, die winkelmäßig innerhalb eines zweiten der zumindest zwei Richtungsbereiche orientiert sind, darstellt, um ein Bild mit zusammengesetzten Merkmalen zu bilden; und
(C) Wählen (400) zumindest einer Vordergrundregion unter Verwendung zumindest einer verbundenen Region, die von dem Bild mit zusammengesetzten Merkmalen gebildet wird, innerhalb des Intensitätsbilds, wobei die erfaßten Kanten in etwa entsprechend einer Zielausrichtung winkelmäßig orientiert sind.

2. Verfahren nach Anspruch 1, bei dem der Schritt (C) den Schritt des Wählens zumindest einer Vordergrundregion aufweist, in der im wesentlichen erfaßte Kanten vorhanden sind, die winkelmäßig innerhalb zumindest eines, aber nicht innerhalb aller der zumindest zwei Ausrichtungsbereiche ausgerichtet sind.

3. Verfahren nach Anspruch 2, bei dem die Lokalisierung des zumindest einen Objekts der Position der zumindest einen Vordergrundregion entspricht.

4. Verfahren nach Anspruch 3, bei dem der Schritt (C) den Schritt des Wählens zumindest einer Vordergrundregion aufweist, in der ein deutlicher Prozentsatz erfaßter Kanten innerhalb eines einzigen Richtungsbereichs winkelmäßig ausgerichtet ist.

5. Verfahren nach Anspruch 4, bei dem zwei der zumindest zwei Richtungsbereiche sich teilweise überlappen.

6. Verfahren nach Anspruch 4, bei dem die zumindest eine Vordergrundregion ein Barcode-Symbol aufweist.

7. Verfahren nach Anspruch 4, bei dem die zumindest eine Vordergrundregion ein geschichtetes Barcode-Symbol aufweist.

8. Verfahren nach Anspruch 1, in dem der Schritt (C) den Schritt des Wählens zumindest einer Vordergrundregion aufweist, in der ein deutlicher Prozentsatz erfaßter Kanten zueinander orthogonal ist.

9. Verfahren nach Anspruch 8, bei dem die zumindest eine Vordergrundregion eine Matrix aus Quadraten aufweist.

10. Verfahren nach Anspruch 1, in dem Schritt (C) ein Schritt des Auswählens zumindest einer Vordergrundregion aufweist, in der ein deutlicher Prozentsatz erfaßter Kanten zueinander unter 60° ausgerichtet ist.

11. Verfahren nach Anspruch 10, in dem die zumindest eine Vordergrundregion eine Matrix von Sechsecken aufweist.

12. Verfahren nach Anspruch 1, in dem der Schritt (B) folgende weitere Schritte aufweist:

(1) Erzeugen (310) von zumindest zwei Merkmalsbildern, in denen jede im Schritt (A) erfaßte Kante mit einem der zumindest zwei Richtungsbereiche verknüpft wird, wobei jedes der zumindest zwei Merkmalsbilder mit einem Entsprechenden der zumindest zwei Richtungsbereiche verknüpft ist; und
(2) Bilden (330) des zusammengesetzten Merkmalsbilds, indem Pixel in einem ersten Merkmalsbild der zumindest zwei Merkmalsbilder und Pixel im zweiten Merkmalsbild der zumindest zwei Merkmalsbilder miteinander verglichen werden.

13. Verfahren nach Anspruch 12, in dem der Schritt (B) (1) folgende Schritte aufweist:

(a) Bilden zumindest zweier binärer Bilder, wobei jedes der zumindest zwei binären Bilder einem der zumindest zwei Richtungsbereiche entspricht; und
(b) Bilden der zumindest zwei Merkmalsbilder aus den zumindest zwei Binärbildern.

14. Verfahren nach Anspruch 13, in dem der Schritt (A) außerdem die Bestimmung einer Größeninformation und eines Richtungsbereichs für jede erfaßte Kante aufweist, und wobei der Schritt (B) (1) (a) folgende Schritte aufweist:

(i) Wählen (311) eine der erfaßten Kanten für die Verarbeitung;
(ii) Vergleichen (312) der Größeninformation, die der ausgewählten Kante entspricht, mit einem ersten vorbestimmten Schwellenwert, und, wenn die Größeninformation den ersten vorbestimmten Schwellenwert überschreitet, dann

(a) Auswählen (313) eines der zumindest zwei Richtungsbereiche, der den Richtungsbereich der ausgewählten Kante aufweist;
(b) Auswählen eines der zumindest zwei Binärbilder entsprechend dem gewählten Richtungsbereich; und
(c) Setzen (314) eines binären Pixels im ausgewählten Binärbild auf Hoch, wobei das binäre Pixel im gewählten Binärbild eine Position entsprechend der Position der ausgewählten Kante im Intensitätsbild hat;

(iii) Wiederholen der Schritte (i) - (ii) für jede der erfaßten Kanten.

15. Verfahren nach Anspruch 14, in dem der Schritt (B) (1) (b) folgende Schritte aufweist:

(i) Unterteilen jedes der zumindest zwei Binärbilder in mehrere Regionen;
(ii) Bestimmen der Konzentration der auf Hoch gesetzten Pixel in jeder der Regionen;
(iii) Bilden einer Pixelhaufenregion in jeder der Regionen, wo die Konzentration der auf Hoch gesetzten Binärpixel einen zweiten vorbestimmten Schwellenwert überschreitet; und
(iv) Bilden einer freien Region in jeder der Regionen, wo die Konzentration der auf Hoch gesetzten Binärpixel den zweiten vorbestimmten Schwellenwert nicht überschreitet.

16. Verfahren nach Anspruch 14, in dem der Schritt (B) (1) (b) folgende Schritte aufweist:

(i) kachelartiges Aufteilen (316) jedes Binärbilds in mehrere Blöcke;

(ii) Wählen (317) eines der Blöcke;

(iii) Bestimmen (318) der Anzahl der im ausgewählten Block im Schritt (B)(1) (a) (ii) (c) auf Hoch gesetzten Binärpixel;

(iv) Vergleichen (319) der Anzahl der Binärpixel mit einem zweiten vorbestimmten Schwellenwert;

(v) wenn die Anzahl der Binärpixel den zweiten vorbestimmten Schwellenwert überschreitet, dann Setzen (320) eines einzelnen Binärpixels in einem Ausgabebinärbild auf Hoch, und sonst Setzen (321) eines einzelnen Binärpixels in einem Ausgangsbinärbild auf Niedrig; und

(vi) Wiederholen der Schritte (ii) - (v) für jeden der verbleibenden Blöcke.

**17.** Verfahren nach Anspruch 12, in dem der Schritt (B) (2) folgende Schritte aufweist:

(a) Auswählen eines entsprechenden Pixels aus jedem der zumindest zwei Merkmalsbilder;

(b) wenn nur einer der ausgewählten entsprechenden Pixel auf Hoch gesetzt ist oder wenn nur einer oder nur zwei der ausgewählten entsprechenden Pixel in drei Merkmalsbildern auf Hoch gesetzt sind, dann Setzen eines Pixels im zusammengesetzten Merkmalsbild auf Hoch, wobei das auf Hoch gesetzte Pixel im zusammensetzten Merkmalsbild in seiner Position der Position der ausgewählten entsprechenden Pixel innerhalb der Merkmalsbilder entspricht; und

(c) Wiederholen der Schritte (a) - (b) für jede in den Merkmalsbildern verbleibende Gruppe von einander entsprechenden Pixeln.

**18.** Verfahren nach Anspruch 12, wobei N Merkmalsbilder vorgesehen sind, wobei N größer oder gleich zwei ist, und wobei Schritt (B) (2) folgende Schritte aufweist:

(a) Auswählen (340) einander entsprechender Pixel aus jedem der M ausgewählten Merkmalsbilder, wobei $M \geq$ zwei und $\leq N$ ist;

(b) Auswählen eines Pixels aus dem zusammengesetzten Merkmalsbild, wobei das ausgewählte Pixel im zusammengesetzten Merkmalsbild in seiner Position der Position der M einander entsprechenden Pixel in den M ausgewählten Merkmalsbildern entspricht;

(c) wenn zumindest eines der M ausgewählten, einander entsprechenden Pixel auf Hoch gesetzt ist, aber nicht alle der M ausgewählten, einander entsprechenden Pixel auf Hoch gesetzt sind, dann Setzen des ausgewählten Pixels im zusammengesetzten Merkmalsbild auf Hoch; und

(d) Wiederholen der Schritte (a) - (c) für jedes im zusammengesetzten Merkmalsbild verbleibende Pixel.

**19.** Verfahren nach Anspruch 12, bei dem ein erstes, ein zweites, ein drittes und ein viertes Merkmalsbild vorgesehen sind, und Schritt (B) (2) folgende Schritte aufweist:

(a) für jedes Pixel Vornehmen einer logischen Exklusiv-ODER-Verknüpfung (332a) für dieses Pixel im ersten Merkmalsbild und ein entsprechendes Pixel im dritten Merkmalsbild;

(b) für jedes Pixel Vornehmen einer logischen Exklusiv-ODER-Verknüpfung (332b) für dieses Pixel im zweiten Merkmalsbild und ein entsprechendes Pixel im vierten Merkmalsbild; und

(c) zur Bildung des zusammengesetzten Merkmalsbild pixelweise logisches ODER-Verknüpfen (333) des Ergebnisses des Schritts (B) (2) (a) und des Schritts (B) (2) (b).

**20.** Verfahren nach Anspruch 12, in dem der Schritt (B) außerdem folgende Schritte aufweist:

(3) Positionieren eines verschieblichen Fensters in der oberen linken Ecke des zusammengesetzten Merkmalsbilds;

(4) Bestimmen der Konzentration der auf Hoch gesetzten Pixel im verschieblichen Fenster;

(5) Vergleichen der Konzentration mit einem dritten vorbestimmten Schwellenwert;

(6) wenn die Konzentration den dritten Schwellenwert überschreitet, dann Setzen eines entsprechenden Binärpixels im ausgegebenen zusammengesetzten Merkmalsbild auf Hoch, und sonst Setzen des entsprechenden Binärpixels im ausgegebenen zusammengesetzten Merkmalsbild auf Niedrig;

(7) Bewegen des verschieblichen Fensters ein Pixel nach rechts;

(8) Wiederholen der Schritte (4) - (7), bis sich das verschiebliche Fenster an der rechten Seite des zusammengesetzten Merkmalsbilds befindet;

(9) Bewegen des verschieblichen Fensters um ein Pixel nach unten und auf die linke Seite des zusammengesetzten Merkmalsbilds; und

(10) Wiederholen der Schritte (4) - (9), bis sich das verschiebliche Fenster in der unteren rechten Ecke des zusammengesetzten Merkmalsbilds befindet.

**21.** Verfahren nach Anspruch 12, in dem der Schritt (B) außerdem folgende Schritte aufweist:

(3) Unterteilen (352) des zusammengesetzten Merkmalsbilds in mehrere Regionen;
(4) in jeder Region Bestimmen (356) der Konzentration der auf Hoch gesetzten Pixel;
(5) in jeder Region Bilden (360) einer Pixelhaufenregion, wo die Konzentration der auf Hoch gesetzten Pixel einen dritten vorbestimmten Schwellenwert überschreitet; und
(6) in jeder Region Bilden (362) einer freien Region, wo die Konzentration der auf Hoch gesetzten Pixel den dritten vorbestimmten Schwellenwert nicht überschreitet.

22. Verfahren nach Anspruch 12, in dem der Schritt (B) außerdem folgende Schritte aufweist:

(3) kachelartiges Unterteilen (352) des zusammengesetzten Merkmalsbilds in mehrere Blöke;
(4) Auswählen (354) eines der Blöcke;
(5) Bestimmen (356) der Anzahl der im gewählten Block auf Hoch gesetzten Pixel;
(6) Vergleichen (358) der Pixelanzahl mit einem dritten vorbestimmten Schwellenwert;
(7) wenn die Pixelanzahl den dritten vorbestimmten Schwellenwert überschreitet, dann Setzen (360) aller Pixel im gewählten Block auf Hoch, und sonst
Setzen (362) aller Pixel im gewählten Block auf Niedrig; und
(8) Wiederholen (364) der Schritte (5) - (7) für jeden der verbleibenden Blöcke.

23. Verfahren nach Anspruch 20, in dem der Schritt (C) den Schritt des Verbindens zumindest zweier benachbarter Pixel im ausgegebenen zusammengesetzten Merkmalsbild aufweist, um zumindest eine verbundene Region zu bilden, wobei der zumindest eine Vordergrundbereich aus der verbundenen Region gewählt wird.

24. Verfahren nach Anspruch 20, in dem der Schritt (C) folgende Schritte aufweist:

(1) Verbinden (410) benachbarter Pixel im ausgegebenen zusammengesetzten Merkmalsbild, um verbundene Regionen zu bilden;
(2) Berechnen (420) der Fläche jeder verbundenen Region;
(3) Vergleich der Fläche jeder verbundenen Region mit vierten und fünften vorbestimmten Schwellenwerten;
(4) Herausfiltern (430) aus dem ausgegebenen zusammengesetzten Merkmalsbild jeder verbundenen Region mit einer Fläche unter dem vierten vorbestimmten Schwellenwert;
(5) Herausfiltern aus dem ausgegebenen zusammengesetzten Merkmalsbild jeder verbundenen Region mit einer Fläche über dem fünften vorbestimmten Schwellenwert; und

wobei der zumindest eine Vordergrundbereich aus zumindest einem ungefilterten verbundenen Bereich ausgewählt wird.

25. Verfahren nach Anspruch 1, in dem der Schritt (C) folgende Schritte aufweist:

(1) Auswählen zumindest einer Vordergrundregion im Intensitätsbild, in dem die erfaßten Kanten im wesentlichen entsprechend einer ersten Zielausrichtung winkelmäßig ausgerichtet sind; und
(2) Auswählen zumindest einer Vordergrundregion im Intensitätsbild, in der die erfaßten Kanten im wesentlichen entsprechend einer zweiten Zielausrichtung winkelmäßig ausgerichtet sind.

26. Verfahren nach Anspruch 25, bei dem die erste Zielausrichtung der winkelmäßigen Ausrichtung eines eindimensionalen Symbols entspricht.

27. Verfahren nach Anspruch 26, bei dem die zweite Zielausrichtung der winkelmäßigen Ausrichtung eines zweidimensionalen Symbols entspricht.

28. Verfahren nach Anspruch 27, bei dem das eindimensionale Symbol aus einer Gruppe bestehend aus Barcode-Symbolen und übereinanderliegenden Barcode-Symbolen gewählt wird, und wobei das zweidimensionale Symbol aus einer Gruppe bestehend aus Feldern von Quadraten und Feldern von Sechsecken gewählt wird.

29. Verfahren nach Anspruch 1, mit dem weiteren Schritt:

(D) Extrahieren von Bildinformation, die das zumindest eine Objekt darstellt, aus dem Intensitätsbild.

30. Verfahren nach Anspruch 29, bei dem der Schritt (D) folgende Schritte aufweist:

(1) Abbilden (510) der zumindest einen Vordergrundregion auf das Intensitätsbild, um im Intensitätsbild zumindest eine Objektregion zu bilden; und
(2) Extrahieren (520) von Pixeln, die die zumindest eine Objektregion darstellen.

31. Verfahren nach Anspruch 1, mit dem weiteren Schritt:

(D) Zuordnen der zumindest einen Vordergrundregion zu einem Päckchen.

**32.** Verfahren nach Anspruch 31, bei dem der Schritt (D) folgende Schritte aufweist:

(1) Bestimmen (810) einer Kontur entsprechend dem Umriß des Päckchens;
(2) Vergleichen (820) der Kontur mit der zumindest einen Vordergrundregion; und
(3) Zuordnen der zumindest einen Vordergrundregion mit dem Päckchen, wenn sich die zumindest eine Vordergrundregion innerhalb der Kontur befindet.

**33.** Vorrichtung zum Lokalisieren zumindest eines Objekts innerhalb eines Intensitätsbilds (100), mit:

(A) einer Einrichtung (200) zum Analysieren des Intensitätsbilds mit zumindest zwei unterschiedlichen Kantendetektoren, um mehrere Kanten zu erfassen, die in zumindest zwei Richtungsbereichen ausgerichtet sind;
(B) einer ersten Vergleichs- und Kombinationseinrichtung (300) zum Vergleichen und Kombinieren von Informationen, die erfaßte Kanten darstellen, die winkelmäßig in einem ersten der zumindest zwei Ausrichtungsbereiche ausgerichtet sind, mit Informationen, die erfaßte Kanten darstellen, die winkelmäßig in einem zweiten der zumindest zwei Ausrichtungsbereiche ausgerichtet sind, um ein zusammengesetztes Merkmalsbild zu bilden; und
(C) einer Einrichtung (400) zum Auswählen im Intensitätsbild zumindest einer Vordergrundregion unter Verwendung zumindest einer verbundenen Region, die aus dem zusammengesetzten Merkmalsbild geformt wird, in der die erfaßten Kanten winkelmäßig im wesentlichen entsprechend einer Zielausrichtung ausgerichtet sind.

**34.** Vorrichtung nach Anspruch 33, bei der die Auswahleinrichtung (400) eine Einrichtung zum Auswählen zumindest einer Vordergrundregion aufweist, in der erfaßte Kanten winkelmäßig in zumindest einem, aber nicht in allen der Richtungsbereiche im wesentlichen vorliegen.

**35.** Vorrichtung nach Anspruch 34, wobei der Ort des zumindest einen Objekts der Position der zumindest einen Vordergrundregion entspricht.

**36.** Vorrichtung nach Anspruch 35, bei der die Auswahleinrichtung (400) eine Einrichtung zum Wählen zumindest einer Vordergrundregion aufweist, in der ein deutlicher Prozentsatz erfaßter Kanten winkelmäßig innerhalb eines einzigen Richtungsbereichs ausgerichtet ist.

**37.** Vorrichtung nach Anspruch 36, wobei sich zwei der zumindest zwei Richtungsbereiche überlappen.

**38.** Vorrichtung nach Anspruch 36, wobei das zumindest eine Objekt ein einzelnes Barcode-Symbol (710) ist.

**39.** Vorrichtung nach Anspruch 36, bei der das zumindest eine Objekt ein übereinandergeschichtetes Barcode-Symbol ist.

**40.** Vorrichtung nach Anspruch 33, bei der die Auswahleinrichtung eine Einrichtung aufweist zum Wählen zumindest einer Vordergrundregion, in der ein deutlicher Prozentsatz erfaßter Kanten zueinander rechtwinklig ist.

**41.** Vorrichtung nach Anspruch 40, bei der die zumindest eine Vordergrundregion eine Matrix von Quadraten aufweist.

**42.** Vorrichtung nach Anspruch 33, bei der die Auswahleinrichtung eine Einrichtung zum Wählen zumindest einer Vordergrundregion aufweist, in der ein deutlicher Prozentsatz erfaßter Kanten in einem Winkel von 60° zueinander ausgerichtet ist.

**43.** Vorrichtung nach Anspruch 42, bei der die zumindest eine Vordergrundregion eine Matrix von Sechsecken aufweist.

**44.** Vorrichtung nach Anspruch 33, bei der die erste Vergleichseinrichtung (300) außerdem aufweist:

(1) eine Einrichtung (310) zum Erzeugen von zumindest zwei Merkmalsbildern, in denen jede erfaßte Kante einem der Richtungsbereiche zugeordnet wird, wobei jedes Merkmalsbild einem entsprechenden Richtungsbereich zugeordnet ist; und
(2) eine Einrichtung (330) zum Bilden des zusammengesetzten Merkmalsbilds durch Vergleichen von Pixeln in einem der Merkmalsbilder mit Pixeln in einem anderen der Merkmalsbilder.

**45.** Vorrichtung nach Anspruch 44, bei der die Einrichtung zum Erzeugen der Merkmalsbilder aufweist:

(a) eine Einrichtung (311 - 315) zum Bilden zumindest zweier Binärbilder, von denen jedes einem der Richtungsbereiche entspricht; und
(b) eine Einrichtung (316 - 322) zum Erzeugen der Merkmalsbilder aus den Binärbildern.

**46.** Vorrichtung nach Anspruch 45, bei der die Analysiereinrichtung außerdem eine Einrichtung aufweist zum Bestimmen einer Größeninformation und eines Richtungsbereichs für jede der erfaßten Kanten, und wobei die Einrichtung zum Bilden der Binärbilder aufweist:

(i) eine Einrichtung (311) zum Auswählen einer der erfaßten Kanten zur Verarbeitung;
(ii) eine zweite Vergleichseinrichtung (312) zum Vergleichen der Größeninformation, die der ausgewählten Kante entspricht, mit einem ersten vorbestimmten Schwellenwert;
(iii) eine Einrichtung (313) zum Auswählen eines der Richtungsbereiche, der den Richtungsbereich der ausgewählten Kante enthält, wenn die Größeninformation den ersten vorbestimmten Schwellenwert überschreitet;
(iv) eine Einrichtung zum Auswählen eines der Binärbilder entsprechend dem gewählten Richtungsbereich, wenn die Größeninformation den ersten Schwellenwert überschreitet; und
(v) eine Einrichtung (314) um im ausgewählten Binärbild ein Binärpixel auf Hoch zu setzen, wenn die Größeninformation den ersten vorbestimmten Schwellenwert überschreitet, wobei das Binärpixel im ausgewählten Binärbild eine Position entsprechend der Position der ausgewählten Kante im Intensitätsbild hat.

47. Vorrichtung nach Anspruch 46, bei der die Einrichtung zum Erzeugen zumindest zweier Merkmalsbilder aus den zumindest zwei Binärbildern aufweist:

(i) eine Einrichtung zum Unterteilen jedes der Binärbilder in mehrere Regionen;
(ii) eine Einrichtung zum Bestimmen der Pixelkonzentration in jeder Region;
(iii) eine Einrichtung zum Bilden einer Pixelhaufenregion in jeder Region, wo die Konzentration der auf Hoch gesetzten Binärpixel einen zweiten vorbestimmten Schwellenwert überschreitet; und
(iv) eine Einrichtung zum Bilden einer freien Region in jeder Region, wo die Konzentration auf Hoch gesetzten Binärpixel den zweiten vorbestimmten Schwellenwert nicht überschreitet.

48. Vorrichtung nach Anspruch 46, bei der die Einrichtung zum Erzeugen der zumindest zwei Merkmalsbilder aus den zumindest zwei Binärbildern aufweist:

(i) eine Einrichtung (316) zum kachelartigen Unterteilen jedes Binärbilds in mehrere Blöcke;
(ii) eine Einrichtung (317) zum Auswählen eines der Blöcke;
(iii) eine Einrichtung (318) zum Bestimmen der Anzahl der im ausgewählten Block auf Hoch gesetzten Pixel;
(iv) eine dritte Vergleichseinrichtung (319) zum Vergleichen der Binärpixelanzahl mit einem zweiten vorbestimmten Schwellenwert;
(v) eine Einrichtung (320) zum Setzen eines einzelnen Binärpixels im Merkmalsbild auf Hoch, wenn die Anzahl der Binärpixel den zweiten vorbestimmten Schwellenwert überschreitet; und
(vi) eine Einrichtung (321) zum Setzen eines einzelnen binären Pixels im Merkmalsbild auf Niedrig, wenn die Binärpixelanzahl den zweiten vorbestimmten Schwellenwert nicht überschreitet.

49. Vorrichtung nach Anspruch 44, bei die Einrichtung zum Bilden des zusammengesetzten Merkmalsbilds aufweist:

(a) eine Einrichtung zum Auswählen einander entsprechender Pixel aus den Merkmalsbildern; und
(b) eine Einrichtung zum Setzen eines Pixels im zusammengesetzten Merkmalsbild auf Hoch, wenn lediglich einer der ausgewählten, einander entsprechenden Pixel auf Hoch gesetzt ist, wobei das im zusammengesetzten Merkmalsbild auf Hoch gesetzte Pixel seiner Position nach der Position der ausgewählten, einander entsprechenden Pixel in den Merkmalsbildern entspricht.

50. Vorrichtung nach Anspruch 44, bei der N Merkmalsbilder vorgesehen sind, wobei N ≥ zwei ist und wobei die Einrichtung zum Bilden des zusammengesetzten Merkmalsbilds aufweist:

(a) eine Einrichtung (340) zum Auswählen einander entsprechender Pixel aus M ausgewählten Merkmalsbildern, wobei M ≥ zwei und ≤ N ist;
(b) eine Einrichtung zum Wählen eines Pixels aus dem zusammengesetzten Merkmalsbild, wobei das ausgewählte Pixel im zusammengesetzten Merkmalsbild in seiner Position der Position der M ausgewählten, einander entsprechenden Pixel innerhalb der M ausgewählten Merkmalsbilder entspricht;
(c) eine Einrichtung zum Setzen des ausgewählten Pixels im zusammengesetzten Merkmalsbild auf Hoch, wenn zumindest eines, jedoch nicht alle der M ausgewählten, einander entsprechenden Pixel auf Hoch gesetzt sind.

51. Vorrichtung nach Anspruch 44, bei der ein erstes, ein zweites, ein drittes und ein viertes Merkmalsbild vorgesehen sind, wobei die Einrichtung zum Bilden des zusammengesetzten Merkmalsbilds aufweist:

(a) eine erste ODER-Verknüpfung (332a) zum Vornehmen einer logischen Exklusiv-ODER-Verknüpfung für ein Pixel im ersten Merkmalsbild und ein entsprechendes Pixel im dritten Merkmalsbild;

(b) eine zweite ODER-Verknüpfung (332b) zum Vornehmen einer logischen Exklusiv-ODER-Verknüpfung für ein Pixel im zweiten Merkmalsbild und ein entsprechendes Pixel im vierten Merkmalsbild; und

(c) eine Einrichtung (333) zum pixelweisen logischen ODER-Verknüpfen der Ausgabe der ersten ODER-Verknüpfung und der zweiten ODER-Verknüpfung, um das zusammengesetzte Merkmalsbild zu bilden.

52. Vorrichtung nach Anspruch 44, bei der die erste Vergleichseinrichtung außerdem aufweist:

(3) eine Einrichtung zum Positionieren eines verschieblichen Fensters in der oberen linken Ecke des zusammengesetzten Merkmalsbilds;

(4) eine Einrichtung zum Bestimmen der auf Hoch gesetzten Pixel im verschieblichen Fenster;

(5) eine Einrichtung zum Vergleichen der Konzentration mit einem dritten vorbestimmten Schwellenwert;

(6) eine Einrichtung zum Setzen eines entsprechenden Binärpixels im ausgegebenen zusammengesetzten Merkmalsbild auf Hoch, wenn die Konzentration den dritten vorbestimmten Schwellenwert überschreitet;

(7) eine Einrichtung zum Setzen des entsprechenden Binärpixels im ausgegebenen zusammengesetzten Merkmalsbild auf Niedrig, wenn die Konzentration den dritten vorbestimmten Schwellenwert nicht überschreitet; und

(8) eine Einrichtung zum Bewegen des verschieblichen Fensters.

53. Vorrichtung nach Anspruch 44, bei der die erste Vergleichseinrichtung außerdem aufweist:

(3) eine Einrichtung zum Unterteilen des zusammengesetzten Merkmalsbilds in mehrere Regionen;

(4) eine Einrichtung zum Bestimmen der Konzentration der auf Hoch gesetzten Pixel in allen Regionen;

(5) eine Einrichtung zum Bilden einer Pixelhaufenregion in jeder Region, wo die Konzentration der auf Hoch gesetzten Pixel einen dritten vorbestimmten Schwellenwert überschreitet; und

(6) eine Einrichtung zum Bilden einer freien Region in jeder Region, wo die Konzentration der auf Hoch gesetzten Pixel den dritten vorbestimmten Schwellenwert nicht überschreitet.

54. Vorrichtung nach Anspruch 44, bei der die erste Vergleichseinrichtung außerdem aufweist:

(3) eine Einrichtung (352) zum kachelartigen Unterteilen des zusammengesetzten Merkmalsbilds in mehrere Blöke;

(4) eine Einrichtung (354) zum Auswählen eines der Blöke;

(5) eine Einrichtung (356) zum Bestimmen der im ausgewählten Block auf Hoch gesetzten Pixel;

(6) eine vierte Vergleichseinrichtung (358) zum Vergleichen der Pixelanzahl mit einem dritten vorbestimmten Schwellenwert;

(7) eine Einrichtung (360) zum Setzen aller Pixel im ausgewählten Block auf Hoch, wenn die Pixelanzahl den dritten vorbestimmten Schwellenwert überschreitet; und

(8) eine Einrichtung (362) zum Setzen aller Pixel im ausgewählten Block auf Niedrig, wenn die Pixelanzahl den dritten vorbestimmten Schwellenwert nicht überschreitet.

55. Vorrichtung nach Anspruch 52, bei der die Einrichtung zum Auswählen eine Einrichtung (410) aufweist zum Verbinden zumindest zweier benachbarter Pixel im ausgegebenen zusammengesetzten Merkmalsbild, um zumindest eine verbundene Region zu bilden, und wobei die zumindest eine Vordergrundregion aus der zumindest einen verbundenen Region gewählt wird.

56. Vorrichtung nach Anspruch 52, bei der die Einrichtung zum Auswählen aufweist:

(1) eine Einrichtung (410) zum Verbinden benachbarter Pixel im ausgegebenen zusammengesetzten Merkmalsbild, um eine verbundene Region zu bilden;

(2) eine Einrichtung (420) zum Berechnen der Fläche jeder der verbundenen Regionen;

(3) eine fünfte Vergleichseinrichtung (430) zum Vergleichen der Fläche jeder der verbundenen Regionen mit einem vierten und einem fünften vorbestimmten Schwellenwert;

(4) eine Einrichtung zum Herausfiltern aus dem ausgegebenen, zusammengesetzten Merkmalsbild aller verbundenen Regionen mit einer Fläche unter dem vierten vorbestimmten Schwellenwert;

(5) eine Einrichtung zum Herausfiltern aus dem ausgegebenen zusammengesetzten Merkmalsbild jeder verbundenen Region mit einer Fläche über dem fünften vorbestimmten Schwellenwert; und

wobei die zumindest eine Vordergrundregion aus zumindest einer nicht herausgefilterten verbundenen Region gewählt wird.

**57.** Vorrichtung nach Anspruch 33, bei der die Auswahleinrichtung aufweist:

(1) eine erste Einrichtung zum Auswählen zumindest einer Vordergrundregion, in der die erfaßten Kanten winkelmäßig im wesentlichen entsprechend einer ersten Zielausrichtung ausgerichtet sind; und
(2) eine zweite Einrichtung zum Auswählen zumindest einer Vordergrundregion, in der die erfaßten Kanten winkelmäßig im wesentlichen entsprechend einer zweiten Zielausrichtung ausgerichtet sind.

**58.** Vorrichtung nach Anspruch 57, bei der die erste Zielausrichtung der Winkelausrichtung eines eindimensionalen Symbols entspricht.

**59.** Vorrichtung nach Anspruch 58, bei der die zweite Zielausrichtung der Winkelausrichtung eines zweidimensionalen Symbols entspricht.

**60.** Vorrichtung nach Anspruch 59, bei der das eindimensionale Symbol aus einer Gruppe bestehend aus Barcode-Symbolen und gestapelten Barcode-Symbolen gewählt wird und bei der das zweidimensionale Symbol aus einer Gruppe bestehend aus Feldern von Quadraten und Feldern von Sechsekken gewählt wird.

**61.** Vorrichtung nach Anspruch 33 mit

(D) einer Einrichtung zum Extrahieren von Bildinformation aus dem Intensitätsbild (100), die das zumindest eine Objekt darstellt.

**62.** Vorrichtung nach Anspruch 61, bei der die Extraktionseinrichtung aufweist:

(1) eine Einrichtung (510) zum Abbilden der zumindest einen Vordergrundregion auf das Intensitätsbild, um im Intensitätsbild zumindest eine Objektregion zu bilden; und
(2) eine Einrichtung (520) zum Extrahieren von Pixeln, die die zumindest eine Objektregion darstellen.

**63.** Vorrichtung nach Anspruch 33, mit:

(D) einer Einrichtung zum Zordnen der zumindest einen Vordergrundregion zu einem Päckchen.

**64.** Vorrichtung nach Anspruch 63, bei der die Zuordnungseinrichtung aufweist:

(1) eine Einrichtung (810) zum Bestimmen einer Kontur entsprechend dem Umriß des Päckchens;
(2) eine Einrichtung (820) zum Vergleichen der Kontur mit der zumindest einen Vordergrundregion; und
(3) eine Einrichtung zum Zuordnen der zumindest einen Vordergrundregion zum Päckchen, wenn die zumindest eine Vordergrundregion sich innerhalb der Kontur befindet.

**65.** Verfahren nach einem der Ansprüche 1 bis 32, mit dem Schritt:

(D) Bestimmen (950) der Position und der Ausrichtung des zumindest einen Objekts nach Maßgabe der Vordergrundregion.

**66.** Verfahren nach Anspruch 65, bei dem Schritt (C) den Schritt des Wählens einer Aufnahmeregion aufweist, in der erfaßte Kanten vorliegen, die winkelmäßig innerhalb zumindest eines, aber nicht in allen der Winkelbereiche ausgerichtet sind.

**67.** Verfahren nach Anspruch 66, bei dem der Schritt (C) den Schritt des Wählens einer Vordergrundregion aufweist, in der ein deutlicher Prozentsatz der erfaßten Kanten winkelmäßig innerhalb eines einzigen Richtungsbereichs ausgerichtet ist.

**68.** Verfahren nach Anspruch 67, bei dem die Vordergrundregion ein Barcode-Symbol aufweist.

**69.** Verfahren nach Anspruch 65, bei dem der Schritt (C) den Schritt des Auswählens einer Vordergrundregion aufweist, in der ein deutlicher Prozentsatz der erfaßten Kanten zueinander rechtwinklig ist.

**70.** Verfahren nach Anspruch 65, bei dem der Schritt (C) den Schritt des Wählens einer Vordergrundregion aufweist, in der ein deutlicher Anteil der erfaßten Kanten zueinander unter einem Winkel von 60° angeordnet sind.

**71.** Vorrichtung nach einem der Ansprüche 33 bis 64, mit

(D) einer Einrichtung (950) zum Bestimmen der Position und der Ausrichtung des zumindest einen Objekts nach Maßgabe der Vordergrundregion.

**72.** Vorrichtung nach Anspruch 71, bei der die Auswahleinrichtung (940) eine Einrichtung zum Auswählen einer Vordergrundregion aufweist, in der erfaßte Kanten vorliegen, die winkelmäßig in zumindest einem, aber nicht in allen Richtungsbereichen liegen.

**73.** Vorrichtung nach Anspruch 72, bei der die Auswahleinrichtung eine Einrichtung zum Wählen einer Vordergrundregion aufweist, in der ein deutlicher Prozentsatz der erfaßten Kanten innerhalb eines einzigen Richtungsbereichs ausgerichtet ist.

74. Vorrichtung nach Anspruch 73, bei der die Vordergrundregion ein Barcode-Symbol (710) aufweist.

75. Vorrichtung nach Anspruch 71, bei der die Auswahleinrichtung eine Einrichtung zum Wählen einer Vordergrundregion aufweist, in der ein deutlicher Prozentsatz der erfaßten Kanten zueinander rechtwinklig ist.

76. Vorrichtung nach Anspruch 71, bei der die Auswahleinrichtung eine Einrichtung zum Wählen einer Vordergrundregion aufweist, in der ein deutlicher Prozentsatz der erfaßten Kanten zueinander unter einem Winkel von 60° angeordnet sind.

## Revendications

1. Un procédé pour localiser au moins un objet à l'intérieur d'une image d'intensité (100), comprenant les étapes suivantes :

(A) analyser (200) ladite image d'intensité avec au moins deux détecteurs de bords différents, pour détecter une pluralité de bords orientés dans au moins deux plages directionnelles ;
(B) comparer (300) et combiner des informations représentatives des bords détectés orientés angulairement dans une première desdites au moins deux plages directionnelles, et des informations représentatives des bords détectés orientés angulairement dans une seconde desdites au moins deux plages directionnelles, pour former une image caractéristique composite ; et
(C) sélectionner (400) au moins une région de premier plan, en utilisant au moins une région connectée formée à partir de ladite image caractéristique composite, dans ladite image d'intensité, où lesdits bords détectés sont orientés angulairement sensiblement selon une orientation cible.

2. Le procédé selon la revendication 1, dans lequel l'étape (C) comprend l'étape de sélectionner au moins une région de premier plan dans laquelle les bords détectés orientés angulairement dans au moins l'une et dans moins que la totalité desdites au moins deux plages directionnelles sont réellement présents.

3. Le procédé selon la revendication 2, dans lequel la localisation dudit au moins un objet correspond à la position de ladite au moins une région de premier plan.

4. Le procédé selon la revendication 3, dans lequel l'étape (C) comprend l'étape de sélectionner au moins une région de premier plan dans laquelle un pourcentage notable de bords détectés sont orientés angulairement dans une unique plage directionnelle.

5. Le procédé selon la revendication 4, dans lequel deux desdites au moins deux plages directionnelles se chevauchent partiellement.

6. Le procédé selon la revendication 4, dans lequel au moins une région de premier plan contient un symbole de code à barres unique.

7. Le procédé selon la revendication 4, dans lequel ladite au moins une région de premier plan contient un symbole de codes à barres superposés.

8. Le procédé selon la revendication 1, dans lequel l'étape (C) comprend l'étape de sélectionner au moins une région de premier plan dans laquelle un pourcentage substantiel de bords détectés sont orthogonaux les uns par rapport aux autres.

9. Le procédé selon la revendication 8, dans lequel ladite au moins une région de premier plan contient une matrice de carrés.

10. Le procédé selon la revendication 1, dans lequel l'étape (C) comprend l'étape de sélectionner au moins une région de premier plan dans laquelle un pourcentage substantiel de bords détectés sont orientés à 60° les uns par rapport aux autres.

11. Le procédé selon la revendication 10, dans lequel ladite au moins une région de premier plan contient une matrice d'hexagones.

12. Le procédé selon la revendication 1, dans lequel l'étape (B) comprend en outre les étapes suivantes :

(1) générer (310) au moins deux images caractéristiques en associant chaque bord détecté à l'étape (A) avec l'une desdites au moins deux plages directionnelles, chacune desdites au moins deux images caractéristiques étant associée avec l'une correspondante desdites au moins deux plages directionnelles ; et
(2) former (330) ladite image caractéristique composite en comparant des pixels dans une première image caractéristique desdites au moins deux images caractéristiques et des pixels dans une seconde image caractéristique desdites au moins deux images caractéristiques.

**13.** Le procédé selon la revendication 12, dans lequel l'étape (B)(1) comprend les étapes suivantes :

    (a) former au moins deux images binaires, chacune desdites au moins deux images binaires correspondant à l'une desdites au moins deux plages directionnelles ; et

    (b) générer lesdites au moins deux images caractéristiques à partir desdites au moins deux images binaires.

**14.** Le procédé selon la revendication 13, dans lequel l'étape (A) comprend en outre le fait de déterminer une information d'amplitude et une plage directionnelle pour chacun desdits bords détectés, et l'étape (B)(1)(a) comprend les étapes suivantes :

    (i) sélectionner (311) un desdits bords détectés pour traitement ;

    (ii) comparer (312) ladite information d'amplitude correspondant audit bord sélectionné avec un premier seuil prédéterminé, et si l'information d'amplitude dépasse ledit premier seuil prédéterminé, alors :

        (a) sélectionner (313) une desdites au moins deux plages directionnelles qui comprend ladite plage directionnelle dudit bord sélectionné ;

        (b) sélectionner une desdites au moins deux images binaires correspondant à ladite plage directionnelle sélectionnée ; et

        (c) mettre au niveau haut (314) un pixel binaire dans ladite image binaire sélectionnée, ledit pixel binaire tenant dans ladite image binaire sélectionnée une position correspondant à la position dudit bord sélectionné dans ladite image d'intensité ;

    (iii) répéter les étapes (i)-(ii) pour chacun desdits bords détectés.

**15.** Le procédé selon la revendication 14, dans lequel l'étape (B)(1)(b) comprend les étapes suivantes :

    (i) diviser chacune desdites au moins deux images binaires en une pluralité de régions ;

    (ii) déterminer la concentration de pixels de niveau haut dans chaque région de ladite pluralité de régions ;

    (iii) former une région d'agglomération de pixels dans chaque région de ladite pluralité de régions où ladite concentration de pixels binaires de niveau haut dépasse un second seuil prédéterminé ; et

    (iv) former une région blanche dans chaque région de ladite pluralité de régions où ladite concentration de pixels binaires de niveau haut ne dépasse pas ledit second seuil prédéterminé.

**16.** Le procédé selon la revendication 14, dans lequel l'étape (B)(1)(b) comprend les étapes suivantes :

    (i) découper (316) chacune desdites au moins deux images binaires en une pluralité de blocs ;

    (ii) sélectionner (317) un bloc de ladite pluralité de blocs ;

    (iii) déterminer (318) le nombre de pixels binaires dans ledit bloc sélectionné qui ont été mis au niveau haut dans l'étape (B)(1)(A)(ii)(c) ;

    (iv) comparer (319) ledit nombre de pixels binaires à un second seuil prédéterminé ;

    (v) si ledit nombre de pixels binaires dépasse ledit second seuil prédéterminé, alors :

        mettre au niveau haut (320) un unique pixel binaire dans une image binaire de sortie,

        autrement :

        mettre au niveau bas (321) un unique pixel binaire dans une image binaire de sortie ; et

    (vi) répéter les étapes (ii)-(v) pour chaque bloc restant de ladite pluralité de blocs.

**17.** Le procédé selon la revendication 12, dans lequel l'étape (B) (2) comprend les étapes suivantes :

    (a) sélectionner un pixel correspondant dans chacune desdites au moins deux images caractéristiques ;

    (b) si seulement l'un desdits pixels correspondants sélectionnés est au niveau haut, ou si seulement un ou seulement deux desdits pixels correspondants sélectionnés dans trois images caractéristiques sont au niveau haut, alors mettre au niveau haut un pixel dans ladite image caractéristique composite, ledit pixel mis au niveau haut dans ladite image caractéristique composite correspondant en position à la position desdits pixels correspondants sélectionnés dans chacune desdites au moins deux images caractéristiques ; et

    (c) répéter les étapes (a)-(b) pour chaque groupe de pixels correspondants restants dans lesdites au moins deux images caractéristiques.

**18.** Le procédé selon la revendication 12, dans lequel N images caractéristiques sont prévues, N étant plus grand ou égal à 2, et l'étape (B) (2) comprend les étapes suivantes :

(a) sélectionner (340) un pixel correspondant dans chacune de M images caractéristiques sélectionnées, M étant plus grand ou égal à 2 et inférieur ou égal à N ;

(b) sélectionner un pixel dans chaque image caractéristique composite, ledit pixel sélectionné dans ladite image caractéristique composite correspondant en position à la position desdits M pixels correspondants dans lesdites M images caractéristiques sélectionnées ;

(c) si au moins l'un desdits M pixels correspondants sélectionnés est de niveau haut et que moins que la totalité desdits M pixels correspondants sélectionnés sont de niveau haut, alors mettre au niveau haut ledit pixel sélectionné dans ladite image caractéristique composite ; et

(d) répéter les étapes (a)-(c) pour chaque pixel restant dans ladite image caractéristique composite.

19. Le procédé selon la revendication 12, dans lequel des première, seconde, troisième et quatrième images caractéristiques sont prévues, et l'étape (B) (2) comprend les étapes suivantes :

(a) pour chaque pixel dans ladite première image caractéristique, effectuer une opération logique OU exclusif (332a) sur ledit pixel et un pixel correspondant dans ladite troisième image caractéristique ;

(b) pour chaque pixel dans ladite seconde image caractéristique, effectuer une opération logique OU exclusif (332b) sur ledit pixel et un pixel correspondant dans ladite quatrième image caractéristique ; et

(c) traiter par une opération logique OU (333), sur une base pixel par pixel, les résultats des étapes (B)(2)(a) et (B)(2)(b) pour former ladite image caractéristique composite.

20. Le procédé selon la revendication 12, dans lequel l'étape (B) comprend en outre les étapes suivantes :

(3) positionner une fenêtre glissante dans le coin supérieur gauche de ladite image caractéristique composite ;

(4) déterminer la concentration de pixels de niveau haut dans ladite fenêtre glissante ;

(5) comparer ladite concentration à un troisième seuil prédéterminé ;

(6) si ladite concentration dépasse ledit troisième seuil prédéterminé, alors :

mettre au niveau haut un pixel binaire correspondant dans une image caractéristique composite de sortie,

autrement :

mettre au niveau bas ledit pixel binaire correspondant dans ladite image caractéristique composite de sortie ;

(7) déplacer ladite fenêtre glissante d'un pixel vers la droite ;

(8) répéter les étapes (4)-(7) jusqu'à ce que ladite fenêtre glissante soit positionnée contre le côté droit de ladite image caractéristique composite ;

(9) déplacer ladite fenêtre glissante vers le bas d'un pixel et jusqu'au côté gauche de ladite image caractéristique composite ; et

(10) répéter les étapes (4)-(9) jusqu'à ce que ladite fenêtre glissante soit positionnée dans le coin inférieur droit de ladite image caractéristique composite.

21. Le procédé selon la revendication 12, dans lequel l'étape (B) comprend en outre les étapes suivantes :

(3) diviser (352) ladite image caractéristique composite en une pluralité de régions ;

(4) déterminer (356) la concentration de pixels de niveau haut dans chaque région de ladite pluralité de régions ;

(5) former (360) une région d'agglomération de pixels dans chaque région de ladite pluralité de régions où ladite concentration de pixels de niveau haut dépasse un troisième seuil prédéterminé ; et

(6) former (362) une région blanche dans chaque région de ladite pluralité de régions où ladite concentration de pixels de niveau haut ne dépasse pas ledit troisième seuil prédéterminé.

22. Le procédé selon la revendication 12, dans lequel l'étape (B) comprend en outre les étapes suivantes :

(3) découper (352) ladite image caractéristique composite en une pluralité de blocs ;

(4) sélectionner (354) un bloc de ladite pluralité de blocs ;

(5) déterminer (356) le nombre de pixels de niveau haut dans ledit bloc sélectionné ;

(6) comparer (358) ledit nombre de pixels à un troisième seuil prédéterminé ;

(7) si ledit nombre de pixels dépasse ledit troisième seuil prédéterminé, alors :

mettre au niveau haut (360) tous les pixels dans ledit bloc sélectionné,

autrement :

mettre au niveau bas (362) tous les pixels dans ledit bloc sélectionné ; et

(8) répéter (364) les étapes (5)-(7) pour chaque bloc restant de ladite pluralité de blocs.

23. Le procédé selon la revendication 20, dans lequel l'étape (c) comprend l'étape de connecter au moins deux pixels voisins dans ladite image caractéristique composite de sortie pour former au moins une région connectée, où ladite au moins une région de premier plan est sélectionnée à partir de ladite au moins une région connectée.

24. Le procédé selon la revendication 20, dans lequel l'étape (c) comprend les étapes suivantes :

connecter (410) des pixels voisins dans ladite image caractéristique composite de sortie pour former des régions connectées ;
(2) calculer (420) l'aire de chacune desdites régions connectées ;
(3) comparer l'aire de chacune desdites régions connectées à des quatrième et cinquième seuils prédéterminés ;
(4) filtrer (430) ladite image caractéristique composite de sortie par retrait de chaque région connectée dont l'aire est inférieure audit quatrième seuil prédéterminé ;
(5) filtrer ladite image caractéristique composite de sortie par retrait de chaque région connectée dont l'aire dépasse ledit cinquième seuil prédéterminé ; et

ladite au moins une région de premier plan étant sélectionnée à partir de ladite au moins une région connectée non filtrée.

25. Le procédé selon la revendication 1, dans lequel l'étape (C) comprend les étapes suivantes :

(1) sélectionner au moins une région de premier plan dans ladite image d'intensité où lesdits bords détectés sont orientés angulairement sensiblement selon une première orientation cible ; et
(2) sélectionner au moins une région de premier plan dans ladite image d'intensité où lesdits bords détectés sont orientés angulairement sensiblement selon une seconde orientation cible.

26. Le procédé selon la revendication 25, dans lequel ladite première orientation cible correspond à l'orientation angulaire d'un symbole unidimensionnel.

27. Le procédé selon la revendication 26, dans lequel ladite seconde orientation cible correspond à l'orientation angulaire d'un symbole bidimensionnel.

28. Le procédé selon la revendication 27, dans lequel ledit symbole unidimensionnel est choisi dans le groupe comprenant des symboles de code à barres et de codes à barres superposés, et ledit symbole bidimensionnel est choisi dans le groupe comprenant des matrices de carrés et des matrices d'hexagones.

29. Le procédé selon la revendication 1, comprenant en outre l'étape suivante :

(D) extraire de ladite image d'intensité des informations d'image représentatives dudit au moins un objet.

30. Le procédé selon la revendication 29, dans lequel l'étape (D) comprend les étapes suivantes :

(1) cadrer (510) ladite au moins une région de premier plan sur ladite image d'intensité pour former au moins une région d'objet dans ladite image d'intensité ; et
(2) extraire (520) des pixels représentatifs de ladite au moins une région d'objet.

31. Le procédé selon la revendication 1, comprenant en outre l'étape suivante :

(D) associer ladite au moins une région de premier plan avec un paquet.

32. Le procédé selon la revendication 31, dans lequel l'étape (D) comprend les étapes suivantes :

(1) déterminer (810) un contour correspondant à un profil dudit paquet ;
(2) comparer (820) ledit contour avec ladite au moins une région de premier plan ; et
(3) associer ladite au moins une région de premier plan avec ledit paquet si ladite au moins une région de premier plan est positionnée à l'intérieur dudit contour.

33. Un dispositif pour localiser au moins un objet dans une image d'intensité (100), comprenant :

(A) des moyens (200) pour analyser ladite image d'intensité avec au moins deux détecteurs de bords différents, pour détecter une pluralité de bords orientés dans au moins deux plages directionnelles ;
(B) des premiers moyens de comparaison et de combinaison (300) pour comparer et combiner des informations représentatives des bords détectés orientés angulairement dans une première desdites au moins deux plages directionnelles, et des informations représentatives des bords détectés orientés angulairement dans une seconde desdites au moins deux plages directionnelles pour former une image caractéristique composite ; et

(C) des moyens (400) pour sélectionner au moins une région de premier plan, en utilisant au moins une région connectée formée à partir de ladite image caractéristique composite, dans ladite image d'intensité, où lesdits bords détectés sont orientés angulairement sensiblement selon une orientation cible.

34. Le dispositif selon la revendication 33, dans lequel lesdits moyens de sélection (400) comprennent des moyens pour sélectionner au moins une région de premier plan dans laquelle des bords détectés orientés angulairement dans au moins l'une et dans moins que la totalité desdites au moins deux plages directionnelles sont réellement présents.

35. Le dispositif selon la revendication 34, dans lequel la localisation dudit au moins un objet correspond à la position de ladite au moins une région de premier plan.

36. Le dispositif selon la revendication 35, dans lequel lesdits moyens de sélection (400) comprennent des moyens pour sélectionner au moins une région de premier plan dans laquelle un pourcentage substantiel de bords détectés sont orientés angulairement dans une seule plage directionnelle.

37. Le dispositif selon la revendication 36, dans lequel deux desdites au moins deux plages directionnelles se chevauchent.

38. Le dispositif selon la revendication 36, dans lequel ledit au moins un objet est un symbole de code à barres unique (710).

39. Le dispositif selon la revendication 36, dans lequel ledit au moins un objet est un symbole de codes à barres superposés.

40. Le dispositif selon la revendication 33, dans lequel lesdits moyens de sélection comprennent des moyens pour sélectionner au moins une région de premier plan dans laquelle un pourcentage substantiel de bords détectés sont orthogonaux les uns par rapport aux autres.

41. Le dispositif selon la revendication 40, dans lequel ladite au moins une région de premier plan contient une matrice de carrés.

42. Le dispositif selon la revendication 33, dans lequel lesdits moyens de sélection comprennent des moyens pour sélectionner au moins une région de premier plan dans laquelle un pourcentage substantiel de bords détectés sont orientés à 60° les uns par rapport aux autres.

43. Le dispositif selon la revendication 42, dans lequel ladite au moins une région de premier plan contient une matrice d'hexagones.

44. Le dispositif selon la revendication 33, dans lequel lesdits premiers moyens de comparaison (300) comprennent en outre :

(1) des moyens (310) pour générer au moins deux images caractéristiques en associant chacun desdits bords détectés avec l'une desdites au moins deux plages directionnelles, chacune desdites au moins deux images caractéristiques étant associée avec l'une correspondante desdites au moins deux plages directionnelles ; et

(2) des moyens (330) pour former ladite image caractéristique composite en comparant des pixels dans une première image caractéristique desdites au moins deux images caractéristiques et des pixels dans une seconde image caractéristique desdites au moins deux images caractéristiques.

45. Le dispositif selon la revendication 44, dans lequel lesdits moyens pour générer au moins deux images caractéristiques comprend :

(a) des moyens (311-315) pour former au moins deux images binaires, chacune desdites au moins deux images binaires correspondant à l'une desdites au moins deux plages directionnelles ; et (b) des moyens (316-322) pour générer lesdites au moins deux images caractéristiques à partir desdites au moins deux images binaires.

46. Le dispositif selon la revendication 45, dans lequel lesdits moyens d'analyse comprennent en outre le fait de déterminer une information d'amplitude et une plage directionnelle pour chacun desdits bords détectés, et lesdits moyens pour former au moins deux images binaires comprennent :

(i) des moyens (311) pour sélectionner un desdits bords détectés pour traitement ;

(ii) des seconds moyens de comparaison (312) pour comparer ladite information d'amplitude correspondant audit bord sélectionné avec un premier seuil prédéterminé ;

(iii) des moyens (313) pour sélectionner une desdites au moins deux plages directionnelles qui comprend ladite plage directionnelle dudit bord sélectionné si ladite information d'amplitude dépasse ledit premier seuil prédéterminé ;

(iv) des moyens pour sélectionner une desdites au moins deux images binaires correspondant à ladite plage directionnelle sélectionnée si ladite information d'amplitude dépasse ledit premier seuil prédéterminé ; et

(v) des moyens (314) pour mettre au niveau haut un pixel binaire dans ladite image binaire sélectionnée si ladite information d'amplitude dépasse ledit premier seuil prédéterminé, ledit pixel binaire tenant dans ladite image binaire sélectionnée une position correspondant à la position dudit bord sélectionné dans ladite image d'intensité.

47. Le dispositif selon la revendication 46, dans lequel lesdits moyens pour générer lesdites au moins deux images caractéristiques à partir desdites au moins deux images binaires comprennent :

(i) des moyens pour diviser chacune desdites au moins deux images binaires en une pluralité de régions ;

(ii) des moyens pour déterminer la concentration de pixels dans chaque région de ladite pluralité de régions ;

(iii) des moyens pour former une région d'agglomération de pixels dans chaque région de ladite pluralité de régions où ladite concentration de pixels binaires de niveau haut dépasse un second seuil prédéterminé ; et

(iv) des moyens pour former une région blanche dans chaque région de ladite pluralité de régions où ladite concentration de pixels binaires de niveau haut ne dépasse pas ledit second seuil prédéterminé.

48. Le dispositif selon la revendication 46, dans lequel lesdits moyens pour générer lesdites au moins deux images caractéristiques à partir desdites au moins deux images binaires comprennent :

(i) des moyens (316) pour découper chacune desdites au moins deux images binaires en une pluralité de blocs ;

(ii) des moyens (317) pour sélectionner un bloc de ladite pluralité de blocs ;

(iii) des moyens (318) pour déterminer le nombre de pixels binaires dans ledit bloc sélectionné qui ont été mis au niveau haut ;

(iv) des troisièmes moyens (319) pour comparer ledit nombre de pixels binaires à un second seuil prédéterminé ;

(v) des moyens (320) pour mettre au niveau haut (320) un unique pixel binaire dans une image caractéristique si ledit nombre de pixels binaires dépasse ledit second seuil prédéterminé ; et

(vi) des moyens (321) pour mettre au niveau bas un unique pixel binaire dans une image caractéristique si ledit nombre de pixels binaires ne dépasse pas ledit second seuil prédéterminé.

49. Le dispositif selon la revendication 44, dans lequel lesdits moyens pour former ladite image caractéristique composite comprennent :

(a) des moyens pour sélectionner un pixel correspond dans chacune desdites au moins deux images caractéristiques ;

(b) des moyens pour mettre au niveau haut un pixel dans ladite image caractéristique composite si seulement l'un desdits pixels correspondants sélectionnés est au niveau haut, ledit pixel mis au niveau haut dans ladite image caractéristique composite correspondant en position à la position desdits pixels correspondants sélectionnés dans chacune desdites au moins deux images caractéristiques.

50. Le dispositif selon la revendication 44, dans lequel N images caractéristiques sont prévues, N étant plus grand ou égal à 2, et lesdits moyens pour former ladite image caractéristique composite comprennent :

(a) des moyens (340) pour sélectionner un pixel correspondant dans chacune de M images caractéristiques sélectionnées, M étant plus grand ou égal à 2 et inférieur ou égal à N ;

(b) des moyens pour sélectionner un pixel dans chaque image caractéristique composite, ledit pixel sélectionné dans ladite image caractéristique composite correspondant en position à la position desdits M pixels correspondants sélectionnés dans lesdites M images caractéristiques sélectionnées ;

(c) des moyens pour mettre au niveau haut ledit pixel sélectionné dans ladite image caractéristique composite si au moins un desdits M pixels correspondants sélectionnés est de niveau haut et moins que la totalité desdits M pixels correspondants sélectionnés sont de niveau haut.

51. Le dispositif selon la revendication 44, dans lequel des première, seconde, troisième et quatrième images caractéristiques sont prévues, et lesdits moyens pour former ladite image caractéristique composite comprennent :

(a) des premiers moyens (332a) pour effectuer une opération logique OU exclusif sur un pixel dans ladite première image caractéristique et un pixel correspondant dans ladite troisième image caractéristique ;

(b) des seconds moyens (332b) pour effectuer une opération logique OU exclusif sur un pixel dans ladite seconde image caractéristique et un pixel correspondant dans ladite quatrième image caractéristique ; et

(c) des moyens (333) pour traiter par une opération logique OU, sur une base pixel par pixel, les résultats desdits premiers et seconds moyens pour effectuer une opération logique OU exclusif, pour former ladite image caractéristique composite.

52. Le dispositif selon la revendication 44, dans lequel lesdits premiers moyens de comparaison comprennent :

(3) des moyens pour positionner une fenêtre glissante dans le coin supérieur gauche de ladite image caractéristique composite ;

(4) des moyens pour déterminer la concentration de pixels de niveau haut dans ladite fenêtre glissante ;

(5) des moyens pour comparer ladite concentration à un troisième seuil prédéterminé ;

(6) des moyens pour mettre au niveau haut un pixel binaire correspondant dans une image caractéristique composite de sortie si ladite concentration dépasse ledit troisième seuil prédéterminé ;

(7) des moyens pour mettre au niveau bas ledit pixel binaire correspondant dans ladite image caractéristique composite de sortie si ladite concentration ne dépasse pas ledit troisième seuil prédéterminé ; et

(8) des moyens pour déplacer ladite fenêtre glissante.

53. Le dispositif selon la revendication 44, dans lequel lesdits premiers moyens de comparaison comprennent :

(3) des moyens pour diviser ladite image caractéristique composite en une pluralité de régions ;

(4) des moyens pour déterminer la concentration de pixels de niveau haut dans chaque région de ladite pluralité de régions ;

(5) des moyens pour former une région d'agglomération de pixels dans chaque région de ladite pluralité de régions où ladite concentration de pixels de niveau haut dépasse un troisième seuil prédéterminé ; et

(6) des moyens pour former une région blanche dans chaque région de ladite pluralité de régions où ladite concentration de pixels de niveau haut ne dépasse pas ledit troisième seuil prédéterminé.

54. Le dispositif selon la revendication 44, dans lequel lesdits premiers moyens de comparaison comprennent en outre :

(3) des moyens (352) pour découper ladite image caractéristique composite en une pluralité de blocs ; (4) des moyens (354) pour sélectionner un bloc de ladite pluralité de blocs ;

(5) des moyens (356) pour déterminer le nombre de pixels de niveau haut dans ledit bloc sélectionné ; (6) des moyens (358) pour comparer ledit nombre de pixels à un troisième seuil prédéterminé ;

(7) des moyens (360) pour mettre au niveau haut tous les pixels dans ledit bloc sélectionné si ledit nombre de pixels dépasse ledit troisième seuil prédéterminé ; et

(8) des moyens (362) pour mettre au niveau bas tous les pixels dans ledit bloc sélectionné si ledit nombre de pixels ne dépasse pas ledit troisième seuil prédéterminé.

55. Le dispositif selon la revendication 52, dans lequel lesdits moyens de sélection comprennent des moyens (410) pour connecter au moins deux pixels voisins dans ladite image caractéristique composite de sortie pour former au moins une région connectée, et où ladite au moins une région de premier plan est sélectionnée à partir de ladite au moins une région connectée.

56. Le dispositif selon la revendication 52, dans lequel lesdits moyens de sélection comprennent :

des moyens (410) pour connecter des pixels voisins dans ladite image caractéristique composite de sortie pour former des régions connectées ;

(2) des moyens (420) pour calculer l'aire de chacune desdites régions connectées ;

(3) des cinquièmes moyens de comparaison (430) pour comparer l'aire de chacune desdites régions connectées à des quatrième et cinquième seuils prédéterminés ;

(4) des moyens pour filtrer ladite image caractéristique composite de sortie par retrait de chaque région connectée dont l'aire est inférieure audit quatrième seuil prédéterminé ;

(5) des moyens pour filtrer ladite image caractéristique composite de sortie par retrait de chaque région connectée dont l'aire dépasse ledit cinquième seuil prédéterminé ; et

dans lequel ladite au moins une région de premier plan est sélectionnée à partir de ladite au moins une région connectée non filtrée.

57. Le dispositif selon la revendication 33, dans lequel lesdits moyens de sélection comprennent :

(1) des premiers moyens pour sélectionner au moins une région de premier plan dans laquelle lesdits bords détectés sont orientés angulairement sensiblement selon une première orientation cible ; et
(2) des moyens pour sélectionner au moins une région de premier plan dans laquelle lesdits bords détectés sont orientés angulairement sensiblement selon une seconde orientation cible.

58. Le dispositif selon la revendication 57, dans lequel ladite première orientation cible correspond à l'orientation angulaire d'un symbole unidimensionnel.

59. Le dispositif selon la revendication 58, dans lequel ladite seconde orientation cible correspond à l'orientation angulaire d'un symbole bidimensionnel.

60. Le dispositif selon la revendication 59, dans lequel ledit symbole unidimensionnel est choisi dans le groupe comprenant des symboles de code à barres et de codes à barres superposés, et ledit symbole bidimensionnel est choisi dans le groupe comprenant des matrices de carrés et des matrices d'hexagones.

61. Le dispositif selon la revendication 33, comprenant en outre :

(D) des moyens pour extraire de ladite image d'intensité (100) des informations d'image représentatives dudit au moins un objet.

62. Le dispositif selon la revendication 61, dans lequel lesdits moyens d'extraction comprennent :

(1) des moyens (510) pour cadrer ladite au moins une région de premier plan sur ladite image d'intensité pour former au moins une région d'objet dans ladite image d'intensité ; et
(2) des moyens (520) pour extraire des pixels représentatifs de ladite au moins une région d'objet.

63. Le dispositif selon la revendication 33, comprenant en outre :

(D) des moyens pour associer ladite au moins une région de premier plan avec un paquet.

64. Le dispositif selon la revendication 63, dans lequel lesdits moyens d'association comprennent :

(1) des moyens (810) pour déterminer un contour correspondant à un profil dudit paquet ;
(2) des moyens (820) pour comparer ledit contour avec ladite au moins une région de premier plan ; et
(3) des moyens pour associer ladite au moins une région de premier plan avec ledit paquet si ladite au moins une région de premier plan est positionnée à l'intérieur dudit contour.

65. Un procédé selon l'une des revendications 1 à 32, comprenant en outre l'étape suivante :

(D) déterminer (950) la position et l'orientation dudit au moins un objet en rapport avec ladite région de premier plan.

66. Le procédé selon la revendication 65, dans lequel l'étape (C) comprend l'étape de sélectionner une région d'acquisition dans laquelle des bords détectés orientés angulairement dans au moins une et dans moins que la totalité desdites au moins deux plages directionnelles sont réellement présents.

67. Le procédé selon la revendication 66, dans lequel l'étape (C) comprend l'étape de sélectionner une région de premier plan dans laquelle un pourcentage substantiel de bords détectés sont orientés angulairement dans une seule plage directionnelle.

68. Le procédé selon la revendication 67, dans lequel ladite région de premier plan comprend un symbole de code à barres.

69. Le procédé selon la revendication 65, dans lequel l'étape (c) comprend l'étape de sélectionner une région de premier plan dans laquelle un pourcentage substantiel de bords détectés sont orthogonaux les uns par rapport aux autres.

70. Le procédé selon la revendication 65, dans lequel l'étape (c) comprend l'étape de sélectionner une région de premier plan dans laquelle un pourcentage substantiel de bords détectés sont orientés à 60° les uns par rapport aux autres.

71. Un dispositif selon l'une des revendications 33 à 64, comprenant en outre :

(D) des moyens (950) pour déterminer la position et l'orientation dudit au moins un objet en rapport avec ladite région de premier plan.

72. Le dispositif selon la revendication 71, dans lequel des moyens de sélection (940) comprennent des moyens pour sélectionner une région de premier plan dans laquelle des bords détectés orientés angulairement dans au moins une et dans moins que la totalité desdites au moins deux plages directionnelles sont réellement présents.

73. Le dispositif selon la revendication 72, dans lequel des moyens de sélection comprennent des moyens pour sélectionner une région de premier plan dans laquelle un pourcentage substantiel de bords détectés sont orientés angulairement dans une seule plage directionnelle.

74. Le dispositif selon la revendication 73, dans lequel ladite région de premier plan comprend un symbole de code à barres (710).

75. Le dispositif selon la revendication 71, dans lequel lesdits moyens de sélection comprennent des moyens pour sélectionner une région de premier plan dans laquelle un pourcentage substantiel de bords détectés sont orthogonaux les uns par rapport aux autres.

76. Le dispositif selon la revendication 71, dans lequel lesdits moyens de sélection comprennent des moyens pour sélectionner une région de premier plan dans laquelle un pourcentage substantiel de bords détectés sont orientés à 60° les uns par rapport aux autres.

Figure 1

Intensity Image — 100

Edge Detectors — 200

Edge Information Comparator — 300

Foreground Region Selector — 400

Object Extractor — 500

Image Information

Figure 2a

210

| 1 | 0 | -1 |
| 2 | 0 | -2 |
| 1 | 0 | -1 |

ΔX

220

| 1 | 2 | 1 |
| 0 | 0 | 0 |
| -1 | -2 | -1 |

ΔY

Figure 2b

230    0°

| 1 | 1 | 1 |
| 0 | 0 | 0 |
| -1 | -1 | -1 |

←→

240    45°

| 0 | 1 | 0 |
| 1 | 0 | -1 |
| 0 | -1 | 0 |

↙↗

250    90°

| 1 | 0 | -1 |
| 1 | 0 | -1 |
| 1 | 0 | -1 |

↕

260    135°

| 0 | -1 | 0 |
| 1 | 0 | -1 |
| 0 | 1 | 0 |

↖↘

35

Edge Information — 305

Feature Image generator — 310

Composite Feature Image generator — 330

Pixel Cluster region generator — 350

To
Foreground
Region
Selector

Figure 3

Figure 3a

Edge
Information

310a

Selected
Edge — 311

Edge
Magnitude
>
T1
? — 312

N

Y

Binary Image
Selector — 313

Binary Pixel
Set High — 314

All
Edges
Processed
? — 315

N

Y

Binary Images

Figure 36

Binary Images

310b

Binary Image Tiler — 316

Block Selector — 317

Binary Pixel counter — 318

320 — Binary Pixel Set High

Counter ≥ T2 ? — 319

Binary Pixel Set Low — 321

All Blocks Processed ? — 322

N

Y

Feature Images

Figure 3c

Figure 3d

335a

Pixel
Selector

First
Feature
Image →

335b

Second
Feature →
Image

Pixel
Selector

336

Pixel
Comparator

→ Composite
Feature
Image

Figure 3e

Figure 3F

Composite Feature
Image

↓

```
┌─────────────┐
│ Composite   │
│ Image       │ ～ 352
│ Tiler       │
└─────────────┘
       │
       ↓
┌─────────────┐
│ Block       │ ～ 354
│ Selector    │
└─────────────┘
       │
       ↓
┌─────────────┐
│ Pixel       │ ～ 356
│ Counter     │
└─────────────┘
       │
       ↓
```

360 ～                          358 ～                          362 ～

```
┌─────────────┐        ◇◇◇◇◇◇◇◇        ┌─────────────┐
│ All Pixels  │   Y   ◇ Counter ◇   N  │ All Pixels  │
│ In Block    │ ←──── ◇  ≥ T3   ◇ ────→│ In Block    │
│ Set High    │        ◇   ?    ◇       │ Set Low     │
└─────────────┘        ◇◇◇◇◇◇◇◇        └─────────────┘
```

364 ～

```
        ◇◇◇◇◇◇◇◇
   N   ◇   All   ◇
←───── ◇ Blocks  ◇
        ◇Processed◇
        ◇   ?    ◇
        ◇◇◇◇◇◇◇◇
            │ Y
            ↓
```

To Foreground
Region Selector

Figure 4a

410a  410b

Figure 4

Composite Feature Image

Cluster Region Connector — 410

Area of Connected Region Calculation — 420

$T4 \geq Area \geq T5$ ? — 430

Y

To Object Extractor

Figure 5

Selected Foreground
Region

Selected Foreground Region →

Intensity Image 100 →

Mapping means 510 →

gray scale pixel extractor 520 →

image information

Figure 6A

Figure 6B

Figure 6C

634

636

630

632

EP 0 569 982 B1

Figure 6D

Figure    6 E

650

Figure 7

730

710

1Z61001X30000001

UNITED PARCEL SERVICE
RESEARCH & DEVELOPMENT
51-53 KENOSIA AVENUE
DANBURY, CT 06810

UNITED PARCEL SERVICE — 740
CORPORATE
ONE NEW WEAVER STREET
GREENWICH, CT 06831

720

Figure 8

800

Intensity Image — 100

Contour
Determining
Means — 810

400
Foreground
Region
Selector

Contour
Comparing
Means — 820

Figure 8A

840

850

830

51

Figure 9

Intensity Image — 910

Edge Detectors — 920

Edge Information Comparator — 930

Acquisition Region Selector — 940

Object Position And Orientation Information Determined — 950

EP 0 569 982 B1

Figure 10

53

Figure 11

Figure 12A

Figure 12B

Figure 12C

Figure 12D

EP 0 569 982 B1

Figure 12E